(19) Europäisches Patentamt
European Patent Office
Office européen des brevets

(11) **EP 3 047 969 B1**

(12) **EUROPÄISCHE PATENTSCHRIFT**

(45) Veröffentlichungstag und Bekanntmachung des Hinweises auf die Patenterteilung:
**25.04.2018   Patentblatt 2018/17**

(51) Int Cl.:
*B32B 27/08* *(2006.01)*        *B32B 27/32* *(2006.01)*

(21) Anmeldenummer: **15152192.9**

(22) Anmeldetag: **22.01.2015**

(54) **MEHRLAGIGES VERBUNDMATERIAL UND GEGENSTÄNDE UMFASSEND DASSELBE**

MULTI-LAYER COMPOSITE MATERIAL AND ARTICLES COMPRISING THE SAME

MATÉRIAU COMPOSITE MULTICOUCHES ET OBJETS CONSTITUÉS DE CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.07.2016   Patentblatt 2016/30**

(73) Patentinhaber: **Kautex Textron GmbH & Co. KG 53229 Bonn (DE)**

(72) Erfinder: **Lühn, Holger 53757 St.Augustin (DE)**

(74) Vertreter: **Kierdorf Ritschel Richly Patentanwälte PartG mbB Postfach 100411 51404 Bergisch Gladbach (DE)**

(56) Entgegenhaltungen:
**DE-A1- 10 114 872**

**Beschreibung**

Die vorliegende Erfindung betrifft eine Zusammensetzung, sowie ein mehrlagiges Verbundmaterial mit Barriereeigenschaften, Gegenstände, insbesondere Kraftstoffbehälter, umfassend dasselbe, Verfahren zur Herstellung des mehrlagigen Verbundmaterials bzw. der Gegenstände, die selbiges umfassen sowie die Verwendung des mehrlagigen Verbundmaterials bzw. der Gegenstände zur Verminderung der Emission von flüchtigen organischen Verbindungen.

Kunststoffe, insbesondere solche auf Polyolefin-Basis, wie bspw. Polyethylen (PE), haben viele vorteilhafte Eigenschaften, unter anderem ein im Vergleich zu Metallen geringes Gewicht, eine gute Korrosionsbeständigkeit und eine größere Flexibilität im Hinblick auf die Formgebung. Aus diesem Grund werden sie für eine Vielzahl von Anwendungen eingesetzt, bspw. im Bereich der Verpackungen, Behälter und Gebinde insbesondere auch für lösungsmittelhaltige Chemikalien und Kraftstoffe. So kann bspw. durch Kraftstofftanks aus Kunststoff (KKB), insbesondere im Automobilsektor, eine erhebliche Gewichtsreduktion erzielt werden bei gleichzeitig flexiblerer Formgebung, reduzierter Korrosionsanfälligkeit und erhöhter Crash-Sicherheit im Vergleich zu Kraftstofftanks aus Stahl. Allerdings sind Kunststoffe in einem gewissen Ausmaß durchlässig für flüchtige (volatile) organische Verbindungen (auch als "VOC" / volatile organic compounds bezeichnet), die daher, sofern ein Konzentrations- und/oder Druckgradient auf den beiden Seiten des Kunststoffwandung vorliegt, diese durchdringen können und somit an die Umgebung abgegeben werden (sog. Permeation).

Um eine Permeation von VOC durch Kunststoffwandungen zu verringern und so die gerade im Automobilbereich zunehmend strenger werdenden Emissionsauflagen für die Abgabe von Kraftstoffbestandteilen durch die Wandungen sowie Verschluss- und Verbundstellen des Kraftstoffsystems erfüllen zu können, bspw. EPA Tier 1 und 2, CARB (California Air Resources Board) LEV I, II und III und die Europäischen Emissionsstandards 3, 4, 5 und 6, wurden im Stand der Technik bereits verschiedene Ansätze beschrieben.

Es wurde bspw. gemäß DE 101 14 872 A1 der Ansatz verfolgt, die Durchlässigkeit eines Kunststoffes zu verringern, indem dessen Poren durch Zugabe eines fein partikulären anorganischen Additivs aufgefüllt werden.

Zumeist wird jedoch die Kunststoffwandung mit einer polaren Schicht versehen, bspw. durch Fluorierung der Oberfläche bei einlagigen Kraftstoffbehältern oder Einbringen einer zusätzlichen Schicht eines sog. Barrierematerials, welches eine geringe Aufnahmefähigkeit und Durchlässigkeit für VOC zeigt.

Als Barrierematerialien finden bspw. Ethylenvinylalkohol-Copolymere (EVOH) und Polyvinylidenchlorid (PVDC) Verwendung. EVOH ist ein statistisches Copolymer aus Ethylen und Vinylalkohol, welches unter der Bezeichnung EVAL™ mit unterschiedlichen Anteilen von Ethylen im Copolymer von Kuraray (Chiyoda, Japan) kommerziell erhältlich ist. Diese Copolymere weisen im Vergleich zu vielen anderen Kunststoffen sehr gute Barriereeigenschaften gegenüber VOC und eine sehr gute thermoplastische Verarbeitbarkeit auf und sind im Allgemeinen durch Extrusion, Spritzguss und auch Extrusionsblasformen verarbeitbar. Je geringer der Ethylen-Anteil in dem Copolymer ist, desto höher ist dessen Barrierewirkung gegenüber VOC, allerdings nimmt mit abnehmendem Ethylen-Anteil auch die Verarbeitbarkeit und Flexibilität des Copolymers ab.

Gerade im Hinblick auf die zunehmende Verwendung von sog. Biokraftstoffen, die einen signifikanten Anteil mittels biologischer Verfahren hergestellter flüchtiger organischer Verbindungen enthalten, wie bspw. Ethanol (z.B. sog. E10 Kraftstoff mit einem Anteil von 5 bis 10% Ethanol), Butanole und/oder diverse Etherverbindungen in sog. Biokraftstoffen zweiter und dritter Generation, ist eine weitere Verbesserung derartiger Barrieresysteme in Kunststoffen zur Aufnahme, Durchleitung bzw. Umhüllung von Substanzen, die flüchtige organische Substanzen darstellen oder enthalten, erforderlich.

Aufgabe der vorliegenden Erfindung war es daher, ein Material zur Aufnahme, Durchleitung bzw. Umhüllung von Substanzen, welche flüchtige organische Verbindungen darstellen oder enthalten, mit verbesserten Barriereeigenschaften sowie ein Verfahren zu seiner Herstellung bereitzustellen.

Diese Aufgabe wird gelöst durch das mehrlagige Verbundmaterial gemäß Anspruch 1, den Gegenstand gemäß Anspruch 7, sowie die Verwendung und das Verfahren gemäß der Ansprüche 11 bzw. 10.

Überraschenderweise wurde gefunden, dass die Abgabe flüchtiger organischer Substanzen an die Umgebung durch ein kunststoffhaltiges Material, bspw. eine Folie oder eine Wandung eines Behälters, eines Rohrs oder eines Verschluss-oder sonstigen (An-)Bauteils eines solchen Behälters minimiert, d.h. die Barriereeigenschaften des kunststoffhaltigen Materials gegenüber VOC dadurch verbessert werden kann, dass in das kunststoffhaltige Material ein Adsorptionsmaterial eingebracht wird. Dies ist umso überraschender, als da die Adsorptionsmaterialien im Sinne der vorliegenden Erfindung bevorzugt eine poröse Struktur aufweisen. Im Unterschied zu den bereits aus dem Stand der Technik bekannten, zuvor bereits beschriebenen Barrierematerialien wird hierbei nicht grundsätzlich das Eindringen der flüchtigen organischen Substanzen in das kunststoffhaltige Material minimiert, sondern die Freisetzung bereits in das Material eingedrungener flüchtiger organischer Substanzen an die Umgebung vermindert.

Potentiell poröse Adsorptionsmaterialien wie Zeolithe wurden bisher in Polymeren, insbesondere solchen, die zur Herstellung von Kraftstofftanks aus Kunststoff eingesetzt wurden, vornehmlich als Füllstoffe und Stabilisatoren eingesetzt, wie bspw. in DE 10 2004 019 875 A1 beschrieben, oder allenfalls zur Minimierung der Emission von Aldehyden, die während der Synthese, Verarbeitung und Lagerung in dem Polymer selbst gebildet werden und aus diesem freigesetzt werden können, z.B. Formaldehyd oder Acetaldehyd aus Polyestern, wie bspw. in WO 94/29378 A1 und WO 2006/074997 A1 beschrieben.

Die vorliegende Erfindung betrifft daher ein mehrlagiges Verbundmaterial mit Barriereeigenschaften für flüchtige organische Verbindungen, das eine erste und eine zweite Oberfläche aufweist und mindestens eine erste Schicht und mindestens weitere Schicht umfasst, wobei eine der beiden Schichten mindestens ein Adsorptionsmaterial für flüchtige organische Verbindungen und mindestens ein polymeres Trägermaterial in Mischung oder im Verbund mit dem Adsorptionsmaterial umfasst, wobei für den Fall, dass das mindestens eine Adsorptionsmaterial und das mindestens eine polymere Trägermaterial im Verbund vorliegen, das erfindungsgemäße mehrlagige Verbundmaterial mindestens drei Schichten umfasst, wobei das polymere Trägermaterial ausgewählt ist aus der Gruppe, bestehend aus Elastomeren, Thermoplasten und thermoplastischen Elastomeren sowie Mischungen derselben.

Das mehrlagige Verbundmaterial mit Barriereeigenschaften für flüchtige organische Verbindungen kann ein Verbundmaterial sein, wobei die flüchtigen organischen Verbindungen zumindest eine funktionelle Gruppe aufweisen, ausgewählt aus der Gruppe bestehend aus Hydroxygruppe, Estergruppe und/oder Ethergruppe, wobei das mehrlagige Verbundmaterial eine erste und eine zweite Oberfläche aufweist und mindestens eine erste Schicht und mindestens eine weitere Schicht umfasst, dadurch gekennzeichnet, dass eine der beiden Schichten mindestens ein Adsorptionsmaterial für die flüchtigen organischen Verbindungen und mindestens ein polymeres Trägermaterial in Mischung oder im Verbund mit dem Adsorptionsmaterial umfasst, wobei für den Fall, dass das mindestens eine Adsorptionsmaterial und das mindestens eine polymere Trägermaterial im Verbund vorliegen, das Verbundmaterial mindestens drei Schichten umfasst und wobei das Adsorptionsmaterial ausgewählt ist aus der Gruppe bestehend aus Schicht- und Gerüstsilikaten, porösen Kohlenstoffmaterialien und metallorganischen Gerüsten (MOF) und bevorzugt mindestens ein poröses Material umfasst, welches besonders bevorzugt ausgewählt ist aus der Gruppe, bestehend aus Aktivkohle, kovalenten organischen Gerüsten (covalent organic frameworks / COF), porösen Silikaten, metallorganischen Gerüsten (MOF) und Mischungen derselben und insbesondere aus der Gruppe, bestehend aus Zeolithen und metallorganischen Gerüsten (MOF) sowie Mischungen derselben.

Als mehrlagiges Verbundmaterial wird im Sinne der vorliegenden Erfindung ein Material bezeichnet, in welchem mindestens zwei Schichten unterschiedlicher chemischer Zusammensetzung in direktem Kontakt miteinander verbunden sind. Bevorzugt sind in diesem Verbundmaterial mindestens zwei Schichten unterschiedlicher chemischer Zusammensetzung in direktem Kontakt miteinander verbunden, die beide mindestens ein Polymer umfassen, wobei diese Polymere unabhängig voneinander bevorzugt jeweils ausgewählt sind aus der Gruppe, bestehend aus Elastomeren, Thermoplasten und thermoplastischen Elastomeren.

Das Verbundmaterial der vorliegenden Erfindung umfasst mindestens zwei unterschiedliche Schichten, von denen eine ein Adsorptionsmaterial im Sinne der vorliegenden Erfindung enthält. Bevorzugt umfasst die mindestens eine weitere Schicht kein Adsorptionsmaterial im Sinne der vorliegenden Erfindung. Sofern Adsorptionsmaterial und Trägermaterial nicht in Mischung in einer Schicht, sondern im Verbund vorliegen, also das Adsorptionsmaterial in einer separaten Schicht auf und/oder unter einer Schicht aus Trägermaterial vorliegt, umfasst das erfindungsgemäße Verbundmaterial mindestens drei Schichten, von denen jedenfalls zwei bevorzugt kein Adsorptionsmaterial im Sinne der vorliegenden Erfindung umfassen.

Das erfindungsgemäße Verbundmaterial kann aber auch mehr als zwei bzw. im Falle eines Verbundes von Adsorptions- und Trägermaterial mehr als drei Schichten umfassen, bspw. insgesamt drei, vier, fünf, sechs, sieben, acht, neun, zehn, elf, zwölf, 13, 14, 15 oder mehr Schichten, besonders bevorzugt fünf, sechs oder sieben Schichten. Diese Schichten können grundsätzlich die gleiche oder eine unterschiedliche chemische Zusammensetzung aufweisen, mit der Maßgabe, dass die chemische Zusammensetzung zweier miteinander in direktem Kontakt stehenden Schichten jeweils unterschiedlich ist. Mit Ausnahme der adsorptionsmaterialumfassenden Schicht im Falle eines Verbundes von Adsorptions- und Trägermaterial umfassen bevorzugt alle Schichten mindestens ein Polymer.

Sofern das erfindungsgemäße Verbundmaterial mehr als zwei bzw. im Falle eines Verbundes von Adsorptions- und Trägermaterial mehr als drei Schichten umfasst, können auch mehr als eine, bspw. zwei oder drei, adsorptionsmaterialumfassende Schichten vorhanden sein.

Als flüchtige organische Verbindungen werden im Sinne der vorliegenden Erfindung organische Verbindungen bezeichnet, die bei 20 °C (293,15 K) einen Dampfdruck von mindestens 0,01 kPa aufweisen. Die flüchtigen organischen Verbindungen weisen bevorzugt jeweils 1 bis 16, weiterhin bevorzugt jeweils 1 bis 12 und besonders bevorzugt 1 bis 8 Kohlenstoffatome auf. Weiterhin bevorzugt weisen die flüchtigen organischen Verbindungen zumindest eine funktionelle Gruppe auf, ausgewählt aus der Gruppe bestehend aus Hydroxygruppe, Estergruppe und/oder Ethergruppe. Die flüchtigen organischen Verbindungen sind bevorzugt ausgewählt aus der Gruppe, bestehend aus acyclischen und cyclischen aliphatischen und aromatischen, ggf. verzweigten und/oder halogenierten Kohlenwasserstoffen und heteroaromatischen Verbindungen, Alkoholen, Acetalen, Ketonen, Ethern, Carbonsäuren und Mischungen derselben.

Noch bevorzugter sind die flüchtigen organischen Verbindungen ausgewählt aus der Gruppe bestehend aus Alkoholen, Estern und/oder Ethern. Hierbei bevorzugt sind die zuvor genannten Alkohole ausgewählt aus der Gruppe bestehend aus primären, sekundären und/oder tertiären Alkoholen, die bevorzugt 1 bis 16, weiterhin bevorzugt 1 bis 10 und besonders bevorzugt 1 bis 8 Kohlenstoffatome aufweisen. Noch bevorzugter sind die zuvor genannten Alkohole ausgewählt aus der Gruppe bestehend aus Methanol, Ethanol, Propanol, Butanol, Pentanol und/oder deren Isomeren. Bevorzugt weisen die zuvor genannten Ether 1 bis 16, weiterhin bevorzugt 1 bis 10 und besonders bevorzugt 1 bis 8 Kohlenstoffatome auf. Weiter bevorzugt sind die zuvor genannten Ether ausgewählt aus der Gruppe bestehend aus tert-Butylethylether (ETBE), 2-Methoxy-2-methylpropan (Methyl-tert-butylether, MTBE), Dimethylether, Diethylether, Tetrahydrofuran (THF), Di-n-butylether, tert-Amylmethylether (TAME), tert-Amylethylether (TAEE) und Dioxan. Bevorzugt sind die zuvor genannten Ester Fettsäuremethylester (FAME), weiter bevorzugt sind sie ausgewählt aus der Gruppe bestehend aus Rapsmethylester (RME), Sojamethylester (SME) und/oder Jatropha Methyl Ester (JME).

Die flüchtigen organischen Verbindungen können weiterhin auch Aldehyde, Mischungen derartiger Aldehyde sowie Mischungen derartiger Aldehyde mit den zuvor genannten bevorzugten flüchtigen organischen Verbindungen umfassen. Die oben genannten Kohlenwasserstoffe umfassen bevorzugt n-Alkane, iso-Alkane, cyclo-Alkane sowie n-Alkene, iso-Alkene, cyclo-Alkene, jeweils mit einer oder mehreren C=C-Doppelbindungen und aromatische Kohlenwasserstoffe, insbesondere solche mit 1 bis 16, bevorzugt 1 bis 12, weiterhin bevorzugt 4 bis 12 und besonders bevorzugt 4 bis 8 Kohlenstoffatomen, wie insbesondere Methan, Ethan, Propan, n-Butan, i-Butan, n-Pentan, i-Pentan, Neopentan (2,2-Dimethylpropan), Cyclopentan, Methylcyclopentan, n-Hexan, 2-Methylpentan, 3-Methylpentan, 2,2-Dimethylbutan, 2,3-Dimethylbutan, Cyclohexan, Methylcyclohexan, n-Heptan, 2-Methylhexan, 3-Methylhexan, 2,2-Dimethylpentan, 2,3-Dimethylpentan, 2,4-Dimethylpentan, 3,3-Dimethylpentan, 3-Ethylpentan, 2,2,3-Trimethylbutan, n-Octan, 2-Methylheptan, 3-Methylheptan, 4-Methylheptan, 2,2-Dimethylhexan, 2,3-Dimethylhexan, 2,4-Dimethylhexan, 2,5-Dimethylhexan, 3,3-Dimethylhexan, 3,4-Dimethylhexan, 3-Ethylhexan, 2,2,3-Trimethylpentan, 2,2,4-Trimethylpentan (iso-Octan), 2,3,3-Trimethylpentan, 2,3,4-Trimethylpentan, 3-Ethyl-2-methylpentan, 3-Ethyl-3-methylpentan, 2,2,3,3-Tetramethylbutan, Ethen, Propen, 1-Buten, 2-Buten, 2-Methylprop-1-en, Butadien, 1-Penten, 2-Penten, 2-Methylbut-1-en, 2-Methylbut-2-en, 3-Methylbut-1-en, Cyclopenten, 1,3-Pentadien, 1,4-Pentadien, Cyclopentadien, 1-Hexen, 2-Hexen, 3-Hexen, 2-Methylpent-1-en, 2-Methylpent-2-en, 3-Methylpent-1-en, 3-Methylpent-2-en, 4-Methylpent-1-en, 4-Methylpent-2-en, 2-Ethylbut-1-en, 2,3-Dimethylbut-1-en, 2,3-Dimethylbut-2-en, 3,3-Dimethylbut-1-en, Cyclohexen, 1,3-Cyclohexadien, Benzol, Toluol, o-Xylol, m-Xylol, p-Xylol, Ethylbenzol, 3-Ethyltoluol, 1,2,4-Trimethylbenzol, 1,3,5-Trimethylbenzol und Styrol sowie Mischungen derselben, ohne hierauf beschränkt zu sein. Es versteht sich, dass die Untergrenze der Kohlenstoffatome in dem Molekül von der chemischen Struktur des Kohlenwasserstoffs bestimmt wird und diese bspw. bei Olefinen mindestens 2 und bei homoaromatischen Kohlenwasserstoffen mindestens 6 Kohlenstoffatome beträgt. Unter den vorgenannten Kohlenwasserstoffen sind insbesondere n-Butan, n-Pentan, n-Hexan, n-Heptan, n-Octan, i-Butan, i-Pentan, 2-Methylpentan, 3-Methylpentan, 2-Methylhexan, 3-Methylhexan, 2,2-Dimethylpentan, 2,2,3-Trimethylbutan, 2,2,4-Trimethylpentan (iso-Octan), Cyclopentan, Methylcyclopentan, Cyclohexan, Methylcyclohexan, Benzol, Toluol, Ethylbenzol, o-Xylol, m-Xylol, p-Xylol, 3-Ethyltoluol, 1,2,4-Trimethylbenzol, 1,3,5-Trimethylbenzol, 2-Penten, 2-Methylbut-2-en, 2-Methylpent-2-en und Cyclopenten sowie Mischungen derselben besonders bevorzugt.

Die oben genannten Alkohole umfassen ein- sowie mehrwertige, bspw. Diole, acyclische und cyclische aliphatische wie (hetero)aromatische Alkohole, insbesondere solche mit 1 bis 16, bevorzugt 1 bis 10 und besonders bevorzugt 1 bis 8 Kohlenstoffatomen, wie bspw. Methanol, Ethanol, 1-Propanol, 2-Propanol, Butanole wie 1-Butanol, 2-Butanol und 2-Methyl-1-propanol, 2-Methyl-1-butanol, Ethandiol, 1,2-Propandiol, 1,3-Propandiol, Butandiole wie 1,2-Butandiol, 1,3-Butandiol und 1,4-Butandiol, ohne hierauf beschränkt zu sein. Unter den vorgenannten Alkoholen sind insbesondere Ethanol, 1-Butanol, 2-Butanol und 2-Methyl-1-propanol, 1,2-Butandiol, 1,3-Butandiol und 1,4-Butandiol bevorzugt.

Auch bei den oben genannten Acetalen, Ketonen, Ethern und Carbonsäuren kann es sich um acyclische und cyclische, aliphatische wie (hetero)aromatische Verbindungen handeln, die bevorzugt 1 bis 16, weiterhin bevorzugt 1 bis 10 und besonders bevorzugt 1 bis 8 Kohlenstoffatome aufweisen im Falle der Aldehyde und Carbonsäuren und im Falle von Ethern, Acetalen bzw. Ketonen bevorzugt 2 bzw. 3 bis 16, weiterhin bevorzugt 2 bzw. 3 bis 10 und besonders bevorzugt 2 bzw. 3 bis 8 Kohlenstoffatome. Die Ketone, Acetale und Ether können symmetrisch oder auch unsymmetrisch substituiert sein. Bevorzugt können die genannten Acetale, Ketone, Ether, Aldehyde und Carbonsäuren bspw. Formaldehyd, Acetaldehyd, Propanal, Propenal, Butanal, Ethenon, Aceton, Ethylmethylketon, Dimethylether, Ethylmethylether, Methyl-tert-butylether (MTBE), Ethyl-tert-butylether (ETBE), Di-n-butylether, tert-Amylmethylether (TAME), Furane und Tetrahydrofurane wie 2,5-Dimethylfuran, Tetrahydrofuran und 2-Methyltetrahydrofuran, Ameisensäure und Essigsäure sowie Mischungen derselben umfassen, ohne hierauf beschränkt zu sein. Unter den vorgenannten Acetalen, Ketonen, Ethern, Aldehyden und Carbonsäuren sind MTBE, ETBE, TAME, Di-n-butylether, 2,5-Dimethylfuran, Tetrahydrofuran und 2-Methyltetrahydrofuran besonders bevorzugt.

Insbesondere handelt es sich bei den VOC um solche, die aufgrund ihres geringen Siedepunktes bzw. ihres hohen Dampfdruckes gemäß der oben genannten Definition unter Verwendungsbedingungen aus einer kohlenwasserstoffhaltigen Substanz freigesetzt werden können. Bevorzugt handelt es sich hierbei weiterhin um solche Verbindungen, die, sofern sie in einem Kunststoffbehältnis, umfassend Polyethylen, mit einer Wandstärke von 3 mm bei Raumtemperatur aufbewahrt werden, durch Permeation durch die Wand des Gebindes in die Umgebung austreten, sofern keine geeigneten Maßnahmen zur Behandlung des Gebindes getroffen werden. Insbesondere werden hierunter solche Verbindungen verstanden, die in Permeationsmessungen nach der Micro-SHED-Methode (SHED: Sealed Housing for Evaporative Determination), wie in dem SAE Technical Paper 2001-01-3769 "Innovative Testing Device for Ultra-Low Fuel Permeation Systems" beschrieben, bei einer konstanten Temperatur von 40 °C unter Verwendung von Probenplatten aus HDPE (Lupolen 4261 AG von LyondellBasell Industries, Rotterdam, Niederlande) einer Dicke von 3 mm unter Verwendung der entsprechenden Verbindung als flüchtige Testsubstanz eine Permeation von mehr als 0,1 mg dieser Substanz durch die Probenplatte pro Tag zeigen.

Bevorzugt handelt es sich bei der / den flüchtigen organischen Verbindungen nicht oder jedenfalls größtenteils (d.h. > 50 Gew.-%, bevorzugt > 75 Gew.-%, weiterhin bevorzugt > 90 Gew.-% und insbesondere > 99,5 Gew.-%, bezogen auf die Gesamtmasse der adsorbierten organischen Verbindungen) nicht um solche, die aus dem Verbundmaterial freigesetzt werden, wie bspw. bei der Synthese eines Polymers nicht umgesetzte Monomere oder freigesetzte flüchtige Reaktionsprodukte, sondern um eine oder mehrere Verbindungen, die aus einer vorzugsweise flüssigen oder gasförmigen kohlenwasserstoffhaltigen Substanz freigesetzt werden, die sich im Kontakt mit dem Verbundmaterial befindet, nicht jedoch Bestandteil desselben ist.

Als kohlenwasserstoffhaltige Substanzen werden im Sinne der vorliegenden Erfindung sowohl Einzelsubstanzen als auch Substanzgemische verstanden, die mindestens einen Kohlenwasserstoff umfassen, wie Lösungsmittel, Lösungsmittelgemische und lösungsmittelhaltige Substanzen, bspw. Lacke, Reinigungsmittel etc. und insbesondere Kraftstoffe fossilen, biogenen oder synthetischen Ursprungs sowie Mischungen derselben, bspw. Benzin, Diesel, Erdgas, Autogas (Liquefied Petroleum Gas / LPG), verdichtetes Erdgas (Compressed Natural Gas / CPG), Flüssigerdgas (Liquefied Natural Gas / LNG) sowie Mischungen derselben. Besonders bevorzugt handelt es sich bei der kohlenwasserstoffhaltigen Substanz um einen bei Raumtemperatur (20 °C) und Normaldruck (1013,25 hPa) flüssigen Kraftstoff für Automobile.

Als Adsorptionsmaterial wird im Sinne der vorliegenden Erfindung ein festes Material verstanden, welches in der Lage ist, an seiner Oberfläche flüchtige organische Verbindungen anzureichern. Im Zusammenhang mit Adsorptionsmaterialien bezeichnet der Begriff Oberfläche insbesondere auch die bei typischen Adsorptionsmaterialien infolge ihrer Porosität im Verhältnis zur äußeren große innere Oberfläche. Die Anreicherung der flüchtigen Verbindungen als Adsorbat an der Oberfläche des Adsorptionsmaterials kann grundsätzlich auf vander Waals-Kräften, Dipol-Wechselwirkungen, elektrostatischen Wechselwirkungen, Wasserstoffbrückenbindungen sowie der Ausbildung ionischer und/oder kovalenter chemischer Bindungen zwischen dem Adsorptionsmaterial (Adsorbens) und dem Adsorbat beruhen. Nach der Stärke der Wechselwirkungen zwischen Adsorbat und Adsorbens wird hierbei zwischen Physisorption und Chemisorption unterschieden. Grundsätzlich kann die Anreicherung der flüchtigen organischen Verbindungen an dem Adsorptionsmaterial im Sinne der vorliegenden Erfindung auf Physisorption und/oder Chemisorption beruhen. Bevorzugt beruht die Anbindung der flüchtigen organischen Verbindungen an das Adsorptionsmaterial in Rahmen der vorliegenden Erfindung jedoch nicht auf der Ausbildung kovalenter chemischer Bindungen zwischen dem Adsorptionsmaterial und diesen organischen Verbindungen. Daher werden als Adsorptionsmaterial bevorzugt keine Materialien verwendet, die eingelagerte Verbindungen oder Substituenten enthalten, welche mit den flüchtigen organischen Verbindungen eine chemische Reaktion eingehen.

Als Elastomere werden Polymere mit gummielastischem Verhalten bezeichnet, welche bei Raumtemperatur (20 °C) bei Zug- und Druckbelastung wiederholt elastisch verformt werden können, nach Aufhebung des für die Verformung erforderlichen äußeren Zwangs jedoch (relativ schnell) wieder annähernd ihre Ausgangslage einnehmen. Beispiele elastomerer Polymere umfassen insbesondere die unten näher ausgeführten Kautschuke und Silikone.

Als Thermoplaste werden Polymere bezeichnet, die oberhalb der Gebrauchstemperatur (i. A. mindestens Raumtemperatur) einen Fließübergangsbereich besitzen, in welchem sie sich verformen lassen. Der Übergang in den schmelzflüssigen Zustand ist reversibel und kann durch Abkühlen und Erwärmen beliebig oft wiederholt werden (vorausgesetzt, dass keine thermische Zersetzung des Materials durch Überhitzung eintritt). Thermoplaste können durch Pressen, Extrudieren, Spritzgießen, Blasformen und weitere Formgebungsverfahren zu Formteilen verarbeitet werden und lassen sich bei Einwirkung von Druck und Wärme verschweißen.

Beispiele thermoplastischer Polymere umfassen u. a. Polyoxymethylen (POM), Polyethylen (PE), einschließlich Polyethylen hoher und niederer Dichte sowie linearem Polyethylen niederer Dichte (HDPE, LDPE bzw. LLDPE), Polypropylen (PP), Polyamid (PA), Polyethylenterephthalat (PET), Polybutylenterephthalat (PBT), Acrylnitril-Butadien-Styrol (ABS), Polystyrol (PS), Polycarbonat (PC), Polytetrafluorethylen (PFTE), Styrol-Acrylnitril-Copolymer (SAN), Polyphenylenether (PPE), Polyetheretherketon (PEEK), Polyethersulfon (PES), Polyvinylchlorid (PVC), Polysulfon (PSU), Polymethylmethacrylat (PMMA) sowie Mischungen (Blends) derselben, wie bspw. PPO/PS oder PC/ABS, ohne hierauf beschränkt zu sein.

Als thermoplastische Elastomere werden Polymere bzw. Mischungen von Polymeren (Blends) bezeichnet, die sich bei Raumtemperatur wie klassische Elastomere verhalten, unter Wärmezufuhr jedoch ein thermoplastisches Verhalten zeigen, also verformbar werden. Thermoplastische Elastomere enthalten weiche, elastische Segmente / Bereiche mit hoher Dehnbarkeit und geringer Glasübergangstemperatur $T_g$ sowie harte, kristallisierbare Segmente / Bereiche mit Neigung zur Assoziatbildung, geringer Dehnbarkeit und hoher Glasübergangstemperatur $T_g$, die als individuelle, sich nicht durchdringende Phasen vorliegen. Diese können innerhalb eines Polymers bspw. in Form von Blockcopolymeren oder in (mikro)heterogener Phasenverteilung in Polymerblends vorliegen. Beispiele geeigneter Blockcopolymere sind Styrol-Olefin-Blockcopolymere, wie Styrol-Butadien-Styrol-Blockcopolymere (SBS), Styrol-Isopren-Styrol-Blockcopolymere (SIS), Styrol-Ethylenbutylen-Styrol-Blockcopolymere (SEBS), Polyetherester, Polyetheramide, bestimmte Polyurethane und Copolyamide. Geeignete Polymerblends umfassen bspw. Mischungen von Elastomeren wie Ethylen-Propylen-Dien-Kautschuk mit Propylen (PP/EPDM).

Die adsorptionsmaterialumfassende Schicht kann das mindestens eine Adsorptionsmaterial und das mindestens eine polymere Trägermaterial in Mischung oder im Verbund umfassen. Werden das mindestens eine Adsorptionsmaterial und das mindestens eine Trägermaterial in Mischung verwendet, so kann das mindestens eine Adsorptionsmaterial bereits vor oder während der Polymerisation zu der Mischung der zu polymerisierenden Monomere und/oder Präpolymere gegeben werden oder nach Herstellung des mindestens einen Polymers mit diesem vermischt werden, bspw. durch Schmelzvermischung. Als Präpolymere werden im Sinne der Erfindung oligomere, aber auch selbst bereits polymere Verbindungen verstanden, die als Vor- bzw. Zwischenprodukte in der Synthese von Polymeren dienen und hierbei zu höhermolekularen polymeren Verbindungen umgesetzt werden.

Das mindestens eine Adsorptionsmaterial kann aber auch in Form einer Beschichtung auf mindestens eine Oberfläche mindestens einer Trägermaterialschicht aufgebracht werden, optional unter Verwendung geeigneter Haftvermittler, bspw. in Form einer Dispersion des Adsorptionsmittels in einem geeigneten Dispergiermittel bzw. mittels eines Sol-Gel-Verfahrens. Geeignete Verfahren zur Aufbringung von Oberflächenbeschichtungen unter Verwendung von Dispersionen bzw. Solen, bspw. mittels Streichen, Rollen, Rakeln, Spritzen, Sprühen, Eintauchen, Vorhanggießen und Kombinationen derselben, ohne hierauf beschränkt zu sein, sind dem Fachmann bekannt. In diesem Fall liegen das Adsorptionsmaterial und das Trägermaterial im Verbund vor, welcher mindestens zwei Schichten umfasst, nämlich mindestens eine Schicht, umfassend mindestens ein Trägermaterial und mindestens eine Schicht, umfassend das Adsorptionsmaterial, aber kein Polymer als Trägermaterial sowie ggf. mindestens eine weitere Schicht, umfassend einen Haftvermittler, sofern vorhanden. Ferner kann die adsorptionsmaterialumfassende Schicht auch zwischen mindestens zwei trägermaterialumfassende Schichten eingebracht werden, auch dies ggf. unter Verwendung geeigneter Haftvermittlerschichten.

Werden mehrere, voneinander verschiedene Adsorptionsmaterialien verwendet, so können diese gemeinsam in einer Schicht und/oder in getrennten Schichten vorliegen. Diese Schichten können jeweils unabhängig voneinander das jeweilige Adsorptionsmaterial in Mischung mit mindestens einem polymeren Trägermaterial enthalten, oder eine Schicht des jeweiligen Adsorptionsmaterials kann im Verbund mit mindestens einer trägermaterialumfassenden Schicht vorliegen, wie bereits vorstehend beschrieben.

Der Gehalt an Adsorptionsmaterial in der adsorptionsmaterialumfassenden Schicht, sofern Adsorptionsmaterial und Trägermaterial in Mischung in einer Schicht vorliegen, oder in dem Verbund aus der adsorptionsmaterialumfassenden Schicht und der trägermaterialumfassenden Schicht beträgt bevorzugt > 0,001 bis < 80 Gew.-%, weiterhin bevorzugt ≥ 2 und ≤ 50 Gew.-%, besonders bevorzugt ≥ 5 und ≤ 20 Gew.-% und insbesondere 1 bis 30 Gew.-%, 2,5 bis 20 Gew.-%, 5 bis 15 Gew.-%, ≥ 9 und ≤ 13 Gew.-%, oder ≥ 9 und ≤ 11 Gew.-%, jeweils bezogen auf das Gesamtgewicht an Adsorptionsmaterial und polymerem Trägermaterial in der Schicht, die das Adsorptionsmaterial und das Trägermaterial in Mischung enthält bzw. in dem Verbund aus Adsorptions- und Trägermaterial.

Bevorzugt ist das mindestens eine Adsorptionsmaterial ausgewählt aus der Gruppe, bestehend aus Schicht- und Gerüstsilikaten, porösen Kohlenstoffmaterialien und metallorganischen Gerüsten (MOF). Weiterhin bevorzugt umfasst das Adsorptionsmaterial ein poröses Material, welches besonders bevorzugt ausgewählt ist aus der Gruppe, bestehend aus Aktivkohle, kovalenten organischen Gerüsten (covalent organic frameworks / COF), porösen Silikaten, metallorganischen Gerüsten (MOF) und Mischungen derselben und insbesondere aus der Gruppe, bestehend aus Zeolithen und metallorganischen Gerüsten (MOF) sowie Mischungen derselben.

Als porös wird im Sinne der vorliegenden Erfindung ein Material bezeichnet, welches Hohlräume im Inneren und/oder an seiner Oberfläche aufweist, die mit Luft oder anderen materialfremden Stoffen gefüllt sind. Die Porosität ist ein dimensionsloses Maß für das Verhältnis von Hohlraumvolumen zum Gesamtvolumen des Materials, also der Summe aus Hohlraumvolumen und Reinvolumen des Materials. Bevorzugt weist das im Rahmen der Erfindung verwendete Adsorptionsmaterial eine Porosität von mindestens 5%, bevorzugt mindestens 10%, weiterhin bevorzugt mindestens 20%, besonders bevorzugt mindestens 30% und insbesondere bevorzugt mindestens 40% auf. Naturgemäß beträgt die Porosität von Adsorptionsmaterialien weniger als 100%. Üblicherweise weist das im Rahmen der Erfindung verwendete Adsorptionsmaterial eine Porosität bis zu 95%, 90%, 85%, 80%, 75%, 70% oder 65% auf, bestimmt mittels Quecksilberintrusion nach DIN 66133, wobei für einen Vergleich der Materialien untereinander der Kontaktwinkel des Quecksilbers mit der Materialoberfläche auf $\theta = 140°$ und die Oberflächenspannung auf $\sigma = 0,48$ N/m festgelegt wurde. Mittels DIN 66133 werden die offenen Poren eines Materials erfasst, d. h. Poren, die mit der Umgebung und untereinander in Verbindung stehen. Die angegebenen Werte beziehen sich daher auf die auf den offenen Poren des Materials beruhende Porosität.

Je nach Porendurchmesser werden poröse Materialien als mikroporöse (Porendurchmesser unterhalb von 2 nm), mesoporöse (Porendurchmesser 2 bis 50 nm) und makroporöse Materialien (Porendurchmesser oberhalb von 50 nm) bezeichnet. Bei den im Rahmen der Erfindung verwendete Adsorptionsmaterialien handelt es sich bevorzugt um mikroporöse Materialien, d.h. Materialien, in welchen die Mehrzahl der Poren einen Porendurchmesser unterhalb von 2 nm aufweist, bestimmt mittels Mikroporenanalyse durch Gasadsorption nach Horvath-Kawazoe und Sito-Foley gemäß DIN 66135-4. Hierbei wird das Verfahren nach Horvath-Kawazoe für kohlenstoffbasierte Adsorptionsmaterialien verwendet, welche überwiegend schlitzförmige Poren aufweisen, wie bspw. Aktivkohlen. Das Verfahren nach Sito-Foley wird für mikroporöse Adsorptionsmaterialien verwendet, welche überwiegend zylinderförmige Poren aufweisen, wie bspw. Zeolithe. Alternativ kann, wenn die vorherrschende Porenform nicht bekannt ist, die Porenverteilung mittels Quecksilberintrusion nach DIN 66133 unter den bereits genannten Festlegungen ermittelt werden.

Poröse Kohlenstoffmaterialien umfassen im Sinne der vorliegenden Erfindung insbesondere Aktivkohle und sog. kovalente organische Gerüste (covalent organic frameworks / COF).

Als Aktivkohle werden Kohlenstoffstrukturen aus sehr feinen Graphitkristallen und amorphem Kohlenstoff mit einer porösen offenporigen Struktur und einer hohen spezifischen Oberfläche bezeichnet, die üblicherweise mindestens 200 m²/g beträgt und im Allgemeinen zwischen 300 und 2.000 m²/g liegt. Als Adsorptionsmaterialien im Sinne der vorliegenden Erfindung geeignete Aktivkohlen sind bspw. unter den Handelsbezeichnungen BAX®, bspw. BAX® 1100 und BAX® 1500 (Meadwestvaco, Richmond, Virginia, USA), bzw. Norit®, bspw. Norit® CNR 115 und Norit® CN 520 (Norit Americas Inc., Marshall, Texas, USA) kommerziell erhältlich.

Kovalente organische Gerüste (covalent organic frameworks / COF) im Sinne der Erfindung sind poröse, kristalline, dreidimensionale organische Strukturen, in denen über kovalente chemische Bindungen organische Moleküle, sog. Sekundärbausteine (secondary building units), verbunden sind, wobei das resultierende Gerüst keine Metalle enthält (unter diese Definition fällt im vorliegenden Sinne explizit nicht das Halbmetall Bor). Derartige Materialien sind bspw. von X. Feng et al. in Chem. Soc. Rev. 2012, 41, 6010-6022 und den dort zitierten Literaturstellen beschrieben.

Als Schichtsilikate (Phyllosilikate) eignen sich natürlich vorkommende und synthetische, ggf. organisch modifizierte Schichtsilikate, wie bspw. Talk oder Montmorillonit sowie natürlich vorkommende Mineralien, enthaltend Schichtsilikate, wie bspw. Bentonit. Geeignet sind insbesondere auch Schichtsilikate in Form sog. Nanotonerden (Nanoclays), die Nanopartikel von Schichtsilikaten umfassen.

Als Gerüstsilikate (Tektosilikate) eignen sich natürlich vorkommende und synthetische, ggf. organisch modifizierte Gerüstsilikate, wie bspw. Feldspat und Zeolithe, die nachfolgend ausführlicher beschrieben werden.

Zeolithe sind mikroporöse kristalline Alumosilikate, die in der Natur in zahlreichen Modifikationen vorkommen und auch synthetisch hergestellt werden können. In Zeolithen liegen $SiO_4^-$ und $AlO_4^-$-Tetraeder über Sauerstoffbrücken verknüpft in einer Weise vor, dass sich geordnete Kanal- und Käfigstrukturen bilden. Wegen ihrer Eigenschaft aufgrund ihrer regelmäßigen Porengrößenverteilung Moleküle selektiv ihrer Größe nach trennen zu können, werden sie auch als Molekularsiebe bezeichnet. Die maximale Größe einer Spezies, d.h. eines Moleküls, Ions oder Komplexes, welche in das Innere dieser Poren eindringen kann, wird durch ihren kinetischen Durchmesser bestimmt.

Zeolithe lassen sich unter der allgemeinen Formel $M^{n+}_{x/n}[(AlO_2)^-_x(SiO_2)_y] \cdot zH_2O$ subsumieren, in welcher M üblicherweise die austauschbaren Alkali- oder Erdalkalimetallkationen bezeichnet, wie bspw. $Na^+$, $K^+$, $Ca^{2+}$, $Ba^{2+}$, aber auch $H^+$ oder (weniger bevorzugt) $NH_4^+$ darstellen kann; n die Ladung des Kations bezeichnet und üblicherweise 1 oder 2 ist und z die Anzahl der vom Kristall aufgenommenen Wassermoleküle bezeichnet. Das molare Verhältnis von $SiO_2$ zu $AlO_2$ (y/x), auch als Modul bezeichnet, liegt üblicherweise im Bereich zwischen 1 und 1500.

Überraschenderweise konnte gezeigt werden, dass die Verwendung von Zeolithen als Adsorptionsmaterial im Rahmen der vorliegenden Erfindung mit einem molaren Verhältnis von $SiO_2$ zu $AlO_2$ (y/x) von ≥ 200 hervorragende Ergebnisse lieferte. Dementsprechend werden bevorzugt als Adsorptionsmaterial im Rahmen der vorliegenden Erfindung Zeolithe mit einem molaren Verhältnis von $SiO_2$ zu $AlO_2$ (y/x) von ≥ 200 und ≤ 1500 verwendet. Ebenfalls bevorzugte molare Verhältnis von $SiO_2$ zu $AlO_2$ (y/x) liegen in einem Bereich von > 50 und ≤ 1500, oder > 100 und ≤ 1400, bevorzugter ≥ 400 und ≤ 1300 und noch bevorzugter ≥ 500 und ≤ 1000. Ein molares Verhältnis von $SiO_2$ zu $AlO_2$ (y/x) im Bereich von ≥ 700 und ≤ 900 ist am bevorzugtesten.

Weiterhin wurde überaschenderweise festgestellt, dass sich die Partikelgröße des verwendeten Adsorptionsmaterials, bevorzugt eines Zeolithen mit den zuvor definierten molaren Verhältnis von $SiO_2$ zu $AlO_2$, positiv auf die Adsorptionscharakteristik des Adsorptionsmaterial auswirken kann. So liegt die Partikelgröße des Adsorptionsmaterials bevorzugt in einem Bereich von > 1 μm und ≤ 150 μm, noch bevorzugter in einem Bereich von > 1 μm und ≤ 50 μm und weiter bevorzugt in einem Bereich von > 1 μm und ≤ 15 μm. Ein Bereich von > 1 μm und ≤ 10 μm, oder > 1 μm und < 10 μm ist am bevorzugtesten. Zusätzlich zu den verbesserten Adsorptionseigenschaften zeigte sich, dass eine Verarbeitung des erfindungsgemäßen Adsorptionsmaterials in Mischung oder im Verbund mit dem polymeren Trägermaterial, beispielsweise bei einem Coextrusionsverfahren, ebenfalls mit den zuvor definierten Partikelgrößen verbessert wurde. So zeigte sich beispielsweise, dass die Herstellung eines Coextrudats umfassend ein erfindungsgemäßes Adsorptionsmaterials mit einer Partikelgröße von etwa 10 μm, beispielsweise in einem Bereich von > 1 μm und ≤ 15 μm, oder > 1 μm und ≤ 10 μm, in Mischung mit dem polymeren Trägermaterial ein qualitativ hochwertigeres und verlässlicher herzustellendes Coextrudat ergab, als bei Verwendung eins Adsorptionsmaterials mit einer Partikelgröße von etwa 50 μm in Mischung mit dem polymeren Trägermaterial. Partikelgrößen können gemäß ISO 13320:2009 mittels Laserbeugung (LALLS, Low Angle Laser Light Scattering) unter Verwendung eines Malvern Mastersizer 2000 (Malvern Instruments Ltd., Malvern, Worchestershire, Großbritannien) bestimmt werden.

Besonders bevorzugt werden als Adsorptionsmaterial im Rahmen der vorliegenden Erfindung Zeolithe mit einem Porendurchmesser im Bereich von 0,3 bis 0,7 nm verwendet oder auch Mischungen von Zeolithen unterschiedlicher Struktur und ggf. auch Porendurchmesser, wobei jedoch der Porendurchmesser jedes einzelnen Zeoliths in dieser besonders bevorzugten Ausführungsform ebenfalls im Bereich von 0,3 bis 0,7 nm liegt.

Geeignete Zeolithe umfassen bspw. Zeolith A in der Calcium- (MS 5A), Natrium-(MS 4A) und / oder Kalium-Form (MS 3A), Zeolith L, X oder Y, Zeolithe des Typs Y mit verringertem Aluminiumgehalt (dealuminized NaY-zeolites / DAY), ZSM-5, Chabazit-M, Mordenit, Faujasit sowie Mischungen derselben. Bevorzugt ist der Zeolith ein MFI, BEA, oder MOR Zeolith, wobei der MFI Zeolith am bevorzugtesten ist.

Metallorganische Gerüste (metal organic frameworks, MOF) im Sinne der vorliegenden Erfindung sind mikroporöse kristalline Materialien, welche aus Metallionen und organischen Linkern, also organischen Molekülen, die mindestens zwei dieser Metallionen koordinieren können, bestehen und so poröse dreidimensionale Strukturen ausbilden. Durch eine geeignete Wahl der Metalle und der organischen Linker können die Größe und Struktur der Poren in dem MOF gezielt eingestellt werden. Hierdurch können spezifische Oberflächen von oft weit über 1.000 $m^2 \cdot g^{-1}$ erzielt werden. Geeignete Metalle umfassen bspw. Aluminium, aber auch Übergangsmetalle wie bspw. Eisen, Kupfer, Mangan, Kobalt, Indium, Zink oder Mischungen derselben. Geeignete Linker umfassen beispielsweise Di-, Tri- oder Tetracarbonsäuren, wie Oxalsäure, Fumarsäure, Malonsäure, Succinsäure, Glutarsäure, Phthalsäure, Isophthalsäure, Terephthalsäure, Di- und Triazole, wie bspw. Imidazol oder 1,2,3-Triazol. Die Synthese geeigneter metallorganischer Gerüste ist in der Literatur beschrieben. Darüber hinaus sind MOF mittlerweile auch kommerziell erhältlich, bspw. unter den Handelsnamen BASOLITE™ A100, C300 und Z1200 von BASF (Ludwigshafen, Deutschland).

Geeignete MOF stellen bspw. zeolithische Imidazolat-Gerüste (zeolitic imidazolate frameworks / ZIF) dar. Diese bestehen aus tetraedrisch koordinierten Übergangsmetallionen, wie bspw. Eisen, Kobalt, Kupfer, Mangan, Indium oder Zink, die über organische Imidazol-Linker verbunden sind. Da der Winkel Metall-Imidazol-Metall ähnlich dem Silicium-Sauerstoff-Silicium-Winkel von 145° in Zeolithen ist, weisen ZIF eine topologisch isomorphe Struktur zu Zeolithen auf. Die Synthese geeigneter ZIF definierter Porengröße ist bspw. von K. S. Park et al. in PNAS 2006, 103, 10186-10191 beschrieben worden. Weiterhin bevorzugt sind MOF auf Basis von Aluminiumfumarat, bspw. wie in WO 2012/042410 A1 beschrieben.

Durch eine Abstimmung des Adsorptionsmaterials auf die zu adsorbierenden Verbindungen lässt sich die Adsorption der flüchtigen organischen Verbindungen optimieren. Es können auch Gemische verschiedener Adsorptionsmaterialien eingesetzt werden, um die Adsorptionseigenschaften des erfindungsgemäßen Verbundmaterials auf Gemische flüchtiger organischer Verbindungen abzustimmen. Bevorzugte Adsorptionsmaterialien für Methanol und Ethanol sind bspw. Zeolith A in der Calcium- (MS 5A), Natrium- (MS 4A) und/oder Kalium-Form (MS 3A), ZSM-5 [$Na_nAl_nSi_{96-n}O_{192} \cdot 16H_2O$ mit 0 < n < 27] und Chabazit-M [$(Na_2,K_2,Ca,Sr)Al_2Si_4O_{12} \cdot 16H_2O$], für n- und iso-Alkane ZSM-5, für Toluol Zeolith X oder Y und Faujasit [$(Na,Ca_{0,5},Mg_{0,5},K)_x(Al_xSi_{12-x}O_{24}) \cdot 16H_2O$] mit unterschiedlichen Silicium-Aluminium-Verhältnissen (x üblicherweise zwischen 3,2 und 3,8) und Ladungskompensation durch Metallkationen wie $Li^+$, $Na^+$, $K^+$, $Rb^+$ und $Cs^+$.

Die spezifische Oberfläche des mindestens einen Adsorptionsmaterials beträgt bevorzugt mindestens 10 $m^2$/g, bevorzugt mindestens 50 $m^2$/g, weiterhin bevorzugt mindestens 100 $m^2$/g und besonders bevorzugt mindestens 200 $m^2$/g. Weiterhin bevorzugt sind noch höhere Werte, wie bspw. mindestens 300, 400 oder 500 $m^2$/g, bestimmt gemäß ISO 9277:2010 (BET). Die maximal eingesetzte spezifische Oberfläche des Adsorptionsmaterials wird im Wesentlichen nur durch die Art des verwendeten Adsorptionsmaterials bestimmt und liegt üblicherweise jedenfalls unter 15.000 $m^2$/g.

Das Adsorptionsmaterial weist vorzugsweise Poren mit einem Durchmesser im Bereich von 0,1 bis 10 nm, bevorzugt im Bereich von 0,2 bis 5 nm, weiterhin bevorzugt 0,25 bis 2 nm, besonders bevorzugt 0,3 bis 1 nm und insbesondere 0,3 bis 0,7 nm auf, bestimmt gemäß DIN 66134 und DIN 66135, wie bereits ausgeführt.

Die mindestens eine weitere Schicht in dem erfindungsgemäßen Verbundmaterial, die bevorzugt kein Adsorptionsmaterial enthält und auch keine unmittelbare Trägerschicht für das Adsorptionsmaterial in dem bereits beschriebenen Verbund aus Adsorptions- und Trägermaterial darstellt, umfasst bevorzugt ebenfalls mindestens ein polymeres Material, welches besonders bevorzugt ebenfalls ausgewählt ist aus der Gruppe, bestehend aus Elastomeren, Thermoplasten und thermoplastischen Elastomeren.

Bei diesen polymeren Materialien kann es sich um Homopolymere, Copolymere oder auch eine Mischung von Homo- und/oder Copolymeren handeln. Unter Copolymeren werden im Sinne der vorliegenden Erfindung statistische Polymere, Sequenzcopolymere, Blockcopolymere sowie Pfropfcopolymere verstanden. Beispiele geeigneter Copolymere sind bereits vorstehend genannt worden.

Geeignete Pfropfungsmittel umfassen bspw. Maleinsäure, Maleinsäureanhydrid und/oder Acryläure.

Das polymere Material der adsorptionsmaterialumfassenden Schicht bzw. des adsorptionsmaterialumfassenden Verbundes mit dem Trägermaterial und/oder der weiteren Schicht können bevorzugt unabhängig voneinander ausgewählt sein aus der Gruppe, bestehend aus ggf. substituierten oder modifizierten Polyolefinen, Polyamiden, Polyestern, Polycarbonaten, Polyurethanen, Polyharnstoffen, Polyethern, Polyimiden, Polyacetalen, Kautschuken, Silikonen sowie Copolymeren und Mischungen derselben, weiterhin bevorzugt aus der Gruppe, bestehend aus ggf. substituierten oder modifizierten Polyolefinen, wie Polyethylen, Polypropylen sowie Copolymeren und Mischungen derselben. Besonders bevorzugt umfasst das polymere Material jedenfalls einer Schicht des erfindungsgemäßen Verbundmaterials Polyethylen (PE), insbesondere Polyethylen hoher Dichte (HDPE). Wie weiter unten ausgeführt, kann es sich bei HDPE als dem polymeren Material um "reines" (virgin) HDPE handeln, oder um ein Regenerationsmaterial, welches aus den Produktionsrückständen eines Coextrusionsverfahrens erhalten wurde, d.h. Mahlgut bei welchem alle Schichten eines Coextrudats gemahlen und anschließend wiederverwertet werden. Bevorzugt umfasst das polymeren Material zumindest einen Anteil von 75 Gew.-% HDPE. Noch bevorzugter umfasst das polymeren Material zumindest einen Anteil von 85 Gew.-% HDPE. Am bevorzugtesten umfasst das polymere Material einen Anteil von HDPE im Bereich von ≥ 90 und ≤ 100 Gew.-%, oder ist "reines" (virgin) HDPE.

Bevorzugt umfasst jede der Schichten in dem erfindungsgemäßen Verbundmaterial (mit Ausnahme von Schichten, die Adsorptionsmaterial enthalten, aber kein Polymer) mindestens ein Polymer, welches unabhängig voneinander ausgewählt ist aus der Gruppe, bestehend aus Elastomeren, Thermoplasten und thermoplastischen Elastomeren sowie Mischungen derselben, weiterhin bevorzugt ausgewählt aus den bereits oben angeführten Polymeren.

Unter substituierten und modifizierten Polymeren werden im Sinne der Erfindung Polymere verstanden, die zusätzlich zu den Einheiten, welche aus dem oder den namensgebenden Monomeren stammen, weitere monomere Einheiten mit funktionellen Gruppen als Substituenten umfassen. Diese können in der Haupt-und/oder in den Seitenketten enthalten sein und bereits während der Polymerisation der jeweils namensgebenden Monomere oder nachträglich durch Pfropfung in das Polymer eingebracht werden oder durch chemische Umwandlung bestimmter funktioneller Gruppen des Polymers erzeugt werden.

Bevorzugte Elastomere im Sinne der vorliegenden Erfindung sind Kautschuke natürlichen oder synthetischen Ursprungs, wie bspw. Naturkautschuk (NR), Polyisopren-Kautschuk (IR), Butadien-Kautschuk (BR), Styrol-Butadien-Kautschuk (SBR), Ethen-Propen-Kautschuk (EPM), Ethylen-Propylen-Dien-Kautschuk mit Dienen wie Norbonen, Hexadien oder Dicyclopentadien (EPDM), Chlorpren-Kautschuk (CR), Nitrilkautschuk (NBR), der durch Copolymerisation von Acrylnitril und 1,3-Butadien gewonnen wird, Mischungen (Blends) von Nitrilkautschuk und Polyvinylchlorid (NBR/PVC), hydrierter Acrylnitrilbutadien-Kautschuk (HNBR), chlorsulfoniertes Polyethylen (CSM), Acrylat-Kautschuk (ACM), Ethylen-Acrylat-Kautschuk (AEM), Polyurethan-Kautschuk (PUR), Polyester-Urethan-Kautschuk (AU, EU), Ethylenoxid-Epichlorhydrin-Kautschuk (ECO), Fluorkautschuk (FPM/FKM), Perfluorkautschuk (FFKM) sowie Silikone (z.T. auch als Silikonkautschuke bezeichnet), wie bspw. Methyl-Polysiloxan (MQ), Vinyl-Methyl-Polysiloxan (VMQ), Phenyl-Vinyl-Methyl-Polysiloxan (PVMQ), Fluormethyl-Polysiloxan (FVMQ) und Mischungen derselben, ohne hierauf beschränkt zu sein.

Ferner kann das Polymer Füllstoffe und verstärkende Materialien, wie bspw. synthetische Fasern und Fasern natürlichen Ursprungs, u.a. Glasfasern, Hanf, Kohlefasern, Aluminiumoxidfasern, Keramikfasern, Asbestfasern, Gipsfasern, Aramidfasern, Metallfasern sowie Mischungen derselben enthalten, ohne hierauf beschränkt zu sein. Nicht faserförmige Füllstoffe umfassen bspw. Bornitrid, Sulfate, Ruß, Siliciumdioxid, Graphit und Mischungen derselben, ohne hierauf beschränkt zu sein. Weiterhin kann das polymere Trägermaterial auch weitere Additive und Modifikatoren enthalten, wie bspw. Gleitmittel, Trennmittel, Nukleierungsmittel, Farbstoffe und Farbpigmente, Stabilisatoren, Antioxidationsmittel, Lichtschutzmittel, Flammschutzmittel, Biozide, Haftvermittler, Antistatika, Benetzungsmittel, Weichmacher, Schlagzähmodifizierer, Vernetzungsmittel oder Mischungen derselben, ohne hierauf beschränkt zu sein.

Bevorzugt umfasst mindestens eine weitere Schicht des Verbundmaterials mindestens ein polymeres Material, welches Barriereeigenschaften gegenüber flüchtigen organischen Verbindungen aufweist. Als polymeres Material mit Barriereeigenschaften werden im Sinne der vorliegenden Erfindung Polymere verstanden, welche eine im Vergleich zu einem chemisch nicht modifizierten Polyethylen hoher Dichte bei gleicher Schichtdicke unter identischen Testbedingungen eine geringere Permeation für VOC zeigen, bspw. in einem sog. 24h-Diurnal Zyklus gemäß §86.1233-96 "Diurnal Emission Test" in Title 40, Chapter I, Subchapter C, Part 86, Subpart M des Code of Federal Regulations des US Government (entsprechend dem 24h Temperaturzyklus der EPA oder der CARB) oder bevorzugt der bereits vorstehend beschriebenen Micro-SHED-Testmethode. Derartige polymere Materialien sind dem Fachmann bekannt und umfassen bspw. Polyamid (PA), Ethylen-Vinylalkohol-Copolymer (EVOH), Polyvinylidenchlorid (PVDC) und fluoriertes oder sulfoniertes Polyethylen, bevorzugt EVOH. Die Synthese und Verarbeitung derartiger Polymere sind dem Fachmann bekannt; derartige Polymere sind ferner auch kommerziell erhältlich, wie bereits eingangs erwähnt.

Besonders bevorzugt kann beispielsweise folgender Schichtaufbau des erfindungsgemäßen mehrlagigen Verbundmaterials verwendet werden: Zwischen zwei Schichten aus Polyethylen hoher Dichte (HDPE) ist eine Barriereschicht aus Ethylvinylalkohol (EVOH) eingebracht, welche beidseitig mit jeweils einer haftvermittelnden Schicht (HV) versehen ist, um eine Haftung dieser Barriereschicht an dem HPDE zu bewirken. Aus ökonomischen und ökologischen Gründen kann insbesondere in Schichten, die sich nicht an einer der beiden äußeren Oberflächen des Mehrschichtaufbaus befinden, die im Kontakt mit der Umgebung stehen, anstelle oder zusätzlich zu einer HDPE-Schicht aus Neuware (sog. virgin HDPE) eine Regeneratschicht (RG) verwendet werden, so dass bevorzugt bspw. die folgenden Schichtaufbauten resultieren, in denen AMTM* entweder für eine Schicht, umfassend eine Mischung aus mindestens einem Adsorptionsmaterial im Sinne der vorliegenden Erfindung und mindestens einem Trägermaterial hierfür (AMTM), oder einen Verbund aus Adsorptionsmaterial und Trägermaterial (AM/TM; TM/AM oder TM/AM/TM) steht:

HDPE/HV/EVOH/HV/AMTM*, HDPE/RG/HV/EVOH/HV/AMTM*, HDPE/HV/EVOH/HV/HDPE/AMTM*, HDPE/HV/EVOH/HV/AMTM*/HDPE, HDPE/RG/HV/EVOH/HV/HDPE/AMTM*, HDPE/RG/HV/EVOH/HV/AMTM*/HDPE, HDPE/HV/EVOH/HV/RG/AMTM*, HDPE/HV/EVOH/HV/AMTM*/RG, HDPE/RG/HV/EVOH/HV/RG/AMTM*, HDPE/RG/HV/EVOH/HV/AMTM*/RG, HDPE/HV/EVOH/HV/RG/HDPE/AMTM*, HDPE/HV/EVOH/HV/RG/AMTM*/HDPE, HDPE/RG/HV/EVOH/HV/RG/HDPE/AMTM* und HDPE/RG/HV/EVOH/HV/RG/AMTM*/HDPE, ohne hierauf beschränkt zu sein.

Auch die mit AMTM* bezeichnete Schicht aus mindestens einem Adsorptionsmaterial und mindestens einem Trägermaterial hierfür (AMTM) bzw. der entsprechende Verbund aus Adsorptionsmaterial und Trägermaterial kann über eine oder mehrere Haftvermittlerschichten (HV) mit den übrigen Schichten verbunden sein, wodurch sich bspw. folgende Schichtstrukturen ergeben können:

HDPE/HV/EVOH/HV/AMTM*, HDPE/RG/HV/EVOH/HV/AMTM*, HDPE/HV/EVOH/HV/HDPE/HV/AMTM*, HDPE/HV/EVOH/HV/AMTM*/HV/HDPE, HDPE/RG/HV/EVOH/HV/HDPE/HV/AMTM*, HDPE/RG/HV/EVOH/HV/AMTM*/HV/HDPE, HDPE/HV/EVOH/HV/RG/HV/AMTM*, HDPE/HV/EVOH/HVAMTM*/HV/RG, HDPE/RG/HV/EVOH/HV/RG/HV/AMTM*, HDPE/RG/HV/EVOH/HV/AMTM*/HV/RG, HDPE/HV/EVOH/HV/RG/HDPE/HV/AMTM*, HDPE/HV/EVOH/HV/RG/HV/AMTM*/HV/HDPE, HDPE/RG/HV/EVOH/HV/RG/HDPE/HV/AMTM* und HDPE/RG/HV/EVOH/HV/RG/HV/AMTM*/HV/HDPE, ohne hierauf beschränkt zu sein.

Die jeweiligen Haftvermittler in den einzelnen Schichten, welche diese enthalten, können jeweils gleich oder voneinander verschieden sein.
In der Regeneratschicht kann nicht nur Mahlgut von "reinen" HDPE-Produktionsrückständen verwendet werden, d.h. von Material, dem keine weiteren Zusätze beigemischt waren bzw. das nicht mit weiterem Material coextrudiert wurde, sondern bspw. auch Mahlgut von Produktionsrückständen eines Coextrusionsverfahrens. Da hierbei alle Schichten eines Coextrudats gemahlen werden, wird in diesem Fall ein gewisser Anteil an Adsorptionsmaterial aus der AMTM*-Schicht des vormaligen Coextrudats zwangsläufig in die Regeneratschicht (RG) eingebracht, wenn ein Regenerat eines solchen Coextrudats verwendet wird. Bevorzugt kann aber insbesondere einer Regeneratschicht, welche hinter der Barriereschicht liegt (betrachtet von derjenigen Oberfläche des Verbundmaterials, die im Kontakt mit der kohlenwasserstoffhaltigen Substanz steht) auch gezielt Adsorptionsmaterial zugesetzt werden, wobei in diesem Fall das bereits im Regenerat vorhandene HPDE als Trägermaterial für das Adsorptionsmaterial fungiert (RG(AM)). Hierdurch ergeben sich die im Sinne der vorliegenden Erfindung bevorzugten Schichtaufbauten:

HDPE/HV/EVOH/HV/RG(AM), RG/HV/EVOH/HV/RG(AM), HDPE/RG/HV/EVOH/HV/RG(AM), HDPE/HV/EVOH/HV/RG(AM)/HDPE und HDPE/RG/HV/EVOH/HV/RG(AM)/HDPE, von denen insbesondere die 6- und 7-Schichtaufbauten HDPE/HV/EVOH/HV/RG(AM)/HDPE und HDPE/RG/HV/EVOH/HV/RG(AM)/HDPE besonders bevorzugt sind.

In der vorstehend angegebenen Darstellung des Schichtaufbaus befindet sich auf der linken Seite bevorzugt diejenige Oberfläche des Verbundmaterials, die in Kontakt mit der kohlenwasserstoffhaltigen Substanz im Sinne der vorliegenden Erfindung steht, während sich auf der rechten Seite diejenige Oberfläche des Verbundmaterials befindet, die im Kontakt mit der Umgebung steht. Auf beiden Seiten der oben dargestellten Schichtaufbauten können sich noch weitere Schichten befinden. Jedenfalls der oben dargestellte Verbund aus HDPE-, Haftvermittler-, EVOH- und Regeneratschichten wird bevorzugt im Coextrusionsverfahren hergestellt, während weitere Schichten, inklusive der adsorptionsmaterialumfassenden Schicht, gleichzeitig coextrudiert werden können oder auch nachträglich durch dem Fachmann bekannte Verfahren wie Spritzgießen, Lackieren, Laminieren etc. aufgebracht werden können.
Bevorzugt befindet sich insbesondere die adsorptionsmaterialumfassende Schicht weder unmittelbar an der ersten noch unmittelbar an der zweiten Oberfläche des erfindungsgemäßen mehrlagigen Verbundmaterials, sondern ist von mindestens einer weiteren Schicht bedeckt, besonders bevorzugt einer weiteren Schicht aus polymerem Material, welches gleich oder verschieden von dem Trägermaterial der adsorptionsmaterialumfassenden Schicht sein kann, bspw. eine weitere HDPE- oder eine Lackschicht. Hierdurch kann insbesondere bei der Verwendung von hydrophilen Adsorptionsmaterialien die Aufnahme von Wasser bzw. Wasserdampf aus der Umgebung verhindert oder jedenfalls minimiert werden.
Das mehrlagige Material der vorliegenden Erfindung ist insbesondere geeignet zur Aufnahme, Durchleitung und/oder Umhüllung von Substanzen, die flüchtige organische Verbindungen umfassen.

Die Erfindung betrifft weiterhin eine Zusammensetzung umfassend ein zuvor beschriebenes Adsorptionsmaterial für flüchtige organische Verbindungen und zumindest ein zuvor beschriebenes polymeres Trägermaterial, sowie weiterhin die Verwendung einer solchen Zusammensetzung zur Herstellung eines Gegenstand zur Aufnahme, Durchleitung bzw. Umhüllung von Substanzen, welche die besagte flüchtige organische Verbindungen umfassen, bevorzugt zur Herstellung eines Kraftstoffbehälters. Es wird darauf hingewiesen, dass sämtliche für das Adsorptionsmaterial und/oder das Trägermaterial beschriebenen bevorzugten Ausführungsformen generell und auch in Bezug auf die erfindungsgemäßen Zusammensetzungen frei miteinander kombinierbar sind, solange nicht etwas anderes ausgeführt wird. Daher werden im Folgenden, um Wiederholungen zu vermeiden, nur einige bevorzugte Ausführungsformen der Zusammensetzungen explizit ausgeführt, was jedoch nicht bedeutet, dass dies eine abschließende Aufzählung wäre.

Die Zusammensetzung kann ein Adsorptionsmaterial für flüchtige organische Verbindungen und mindestens ein polymeres Trägermaterial umfassen, wobei die flüchtigen organischen Verbindungen zumindest eine funktionelle Gruppe ausgewählt aus der Gruppe bestehend aus Hydroxygruppe, Estergruppe und/oder Ethergruppe aufweisen und wobei das polymere Trägermaterial das Adsorptionsmaterial ausgewählt ist aus der Gruppe bestehend aus Schicht- und Gerüstsilikaten, porösen Kohlenstoffmaterialien und metallorganischen Gerüsten (MOF) und bevorzugt mindestens ein poröses Material umfasst, welches besonders bevorzugt ausgewählt ist aus der Gruppe, bestehend aus Aktivkohle, kovalenten organischen Gerüsten (covalent organic frameworks / COF), porösen Silikaten, metallorganischen Gerüsten (MOF) und Mischungen derselben und insbesondere aus der Gruppe, bestehend aus Zeolithen und metallorganischen Gerüsten (MOF) sowie Mischungen derselben.

Bevorzugt umfasst das polymere Trägermaterial der Zusammensetzung HDPE mit zumindest einem Anteil von 75 Gew.-%.

Weiter bevorzugt ist das Adsorptionsmaterial der Zusammensetzung ein Zeolith, der ein molares Verhältnis von $SiO_2$ zu $AlO_2$ von $\geq 200$ aufweist.

Ebenfalls bevorzugt ist die Zusammensetzung dadurch gekennzeichnet, dass der Gehalt an Adsorptionsmaterial und polymerem Trägermaterial > 0,001 bis < 80 Gew.-%, bevorzugt $\geq 2$ und $\leq 50$ Gew.-%, weiterhin bevorzugt $\geq 5$ und $\leq 20$ Gew.-% und besonders bevorzugt $\geq 9$ und $\leq 13$ Gew.-%, oder $\geq 9$ und $\leq 11$ Gew.-% beträgt, jeweils bezogen auf das Gesamtgewicht an Adsorptionsmaterial und polymerem Trägermaterial.

Die vorliegende Erfindung betrifft weiterhin einen Gegenstand zur Aufnahme, Durchleitung bzw. Umhüllung von Substanzen, die flüchtige organische Verbindungen umfassen, umfassend das zuvor beschriebene erfindungsgemäße mehrlagige Verbundmaterial oder die zuvor beschriebene erfindungsgermäße Zusammensetzung.

Dieser Gegenstand kann bevorzugt eine Folie, ein Rohr, einen Hohlkörper oder ein Verschluss- oder sonstiges (An-)Bauteil für einen solchen Hohlkörper darstellen, bevorzugt einen Hohlkörper, ein Verschluss- oder sonstiges (An-)-Bauteil hierfür.

Derartige Hohlkörper können bevorzugt Gebinde für die Lagerung und den Transport fester, gelförmiger, pastöser und flüssiger, insbesondere flüssiger Füllgüter darstellen, wie bspw. Kraftstoffe, Haushalts- und Industriechemikalien, inklusive Lösungsmitteln und Reinigungsmitteln, aber auch Kosmetika, umfassend bspw. Flaschen, Kanister, Tanks, Fässer etc., ohne hierauf beschränkt zu sein, sowie Verschluss- oder sonstige (An-)Bauteile hierfür. Verschluss- oder sonstige (An-)Bauteile für derartige Hohlkörper können bspw. Zu- und Ableitungen, Deckel, Ventile und Dichtungen darstellen, ohne hierauf beschränkt zu sein. Besonders bevorzugt stellt der erfindungsgemäße Gegenstand einen Kraftstoffbehälter dar.

In dem erfindungsgemäßen Gegenstand umfasst die mindestens eine weitere Schicht des Verbundmaterials bevorzugt mindestens ein polymeres Material, welches Barriereeigenschaften gegenüber flüchtigen organischen Verbindungen aufweist. Wie bereits vorstehend beschrieben, ist dieses bevorzugt ausgewählt ist aus der Gruppe, bestehend aus Polyamid (PA), Ethylen-Vinylalkohol-Copolymer (EVOH), Polyvinylidenchlorid (PVDC) und fluoriertem oder sulphoniertem Polyethylen. Hierbei ist das Verbundmaterial in dem erfindungsgemäßen Gegenstand bevorzugt so angeordnet, dass sich die Schicht, welche das polymere Material mit Barriereeigenschaften umfasst, näher an derjenigen Oberfläche des Gegenstands befindet, die zum Kontakt mit der VOC umfassenden Substanz vorgesehen ist, als die adsorptionsmaterialumfassende Schicht. Auf diese Weise wird gewährleistet, dass ein großer Teil der VOC bereits durch das Material mit Barriereeigenschaften an der Permeation durch das Verbundmaterial gehindert wird. Der Teil der VOC, welcher dennoch diese Barriereschicht durchdringt, wird dann an dem Adsorptionsmaterial gebunden und so an einem Austritt / einer Emission aus dem erfindungsgemäßen Gegenstand durch das mehrlagige Verbundmaterial hindurch gehindert.

Die vorliegende Erfindung betrifft weiterhin die Verwendung des erfindungsgemäßen mehrlagigen Verbundmaterials, oder der erfindungsgemäßen Zusammensetzung zur Herstellung des erfindungsgemäßen Gegenstand zur Aufnahme, Durchleitung bzw. Umhüllung von Substanzen, welche die besagte flüchtige organische Verbindungen umfassen, bevorzugt zur Herstellung eines Kraftstoffbehälters.

Die Erfindung betrifft weiterhin ein Verfahren zur Herstellung des erfindungsgemäßen Gegenstands oder des erfindungsgemäßen mehrlagigen Verbundmaterials, umfassend einen Schritt zur Ausbildung mindestens einer adsorptionsmaterialumfassenden Schicht mittels (Co-)Extrusion, Spritzguss, (Co-)Extrusionsblasformen oder Laminieren, insbesondere durch Coextrusionsblasformen oder Spritzguss.

Bevorzugt wird bei dem erfindungsgemäßen Verfahren die mindestens eine adsorptionsmaterialumfassende Schicht auf der mindestens einen weiteren Schicht mittels (Co-)Extrusion, Spritzguss, (Co-)Extrusionsblasformen oder Laminieren, insbesondere durch Coextrusionsblasformen, ausgebildet.

Derartige Verfahren zur Herstellung mehrlagiger Verbundmaterialien und Formkörper sind dem Fachmann bekannt. Das erfindungsgemäße Herstellungsverfahren kann ferner weitere Verfahrensschritte umfassen, wie bspw. Schritte zur chemischen und/oder physikalischen Modifizierung des Verbundmaterials oder Gegenstands, zur Formgebung oder zur Modifizierung der Form und / oder Ausrüstung des Verbundmaterials oder des Gegenstands, wie bspw. Schritte, umfassend Thermo- und/oder Vakuumformen, Formpressen, Schweißen, An- und Einbau weiterer Teile, Lackieren, Bedrucken, Etikettieren, ohne hierauf beschränkt zu sein.

Die Erfindung betrifft weiterhin die Verwendung des erfindungsgemäßen mehrlagigen Verbundmaterials oder erfindungsgemäßen Gegenstands zur Verminderung der Emission von flüchtigen organischen Verbindungen, insbesondere aus Kraftstoffen für Automobile, sowie die Verwendung der oben genannten porösen Materialien zur Verminderung der Emission von flüchtigen organischen Verbindungen aus Kraftstoffen in Kunststoff-Kraftstofftanks für Automobile.

Bestimmung der spezifischen Oberfläche

Wie bereits ausgeführt, ist die spezifische Oberfläche ein Maß für die sich aus der porösen Struktur des Adsorptionsmaterials ergebenden inneren Oberfläche. Für makroporöse (Porendurchmessers > 50 nm) und mesoporöse (Porendurchmesser 2 - 50 nm) Feststoffe wird die spezifische Oberfläche aus der volumetrisch-statischen Messung der Stickstoff-Adsorptionsisotherme bei 77,3 K durch Mehrpunkt-Auswertung nach dem BET-Verfahren in einem Relativdruckbereich $p/p_0$ von 0,001 bis 0,3 gemäß ISO 9277:2010 bestimmt. Dieses Verfahren beruht auf der Bestimmung der Menge des Adsorbats bzw. des verbrauchten Adsorptivs, um die äußere und die zugängliche innere Oberfläche eines Feststoffes mit einer vollständigen Monoschicht des Adsorbats zu bedecken.

Mikroporöse Strukturen, wie sie zum Beispiel in Molekularsieben, Zeolithen und Aktivkohlen vorliegen, besitzen Hohlräume mit geometrischen Abmessungen in der Größenordnung von Atomdurchmessern oder effektiven Molekülgrößen. Allerdings wird bei Porendurchmessern im Mikroporenbereich in dem Druckbereich, in welchem eine Mono-Mehrschicht-Adsorption an den Porenwänden stattfindet, häufig eine Porenkondensation beobachtet, wodurch eine einfache BET-Adsorptionsmessung überhöhte Werte ergeben würde. Um in diesen Messungen dennoch auch die innere Oberfläche der in den erfindungsgemäß bevorzugten Adsorptionsmaterialien enthaltenen Mikroporen erfassen zu können, wird unter Berücksichtigung des Anhangs C der ISO 9277:2010 nach dem hierfür unter dem Titel "Präzisionsbestimmung der spezifischen Oberfläche von Feststoffen durch Gasadsorption" durch die Bundesanstalt für Materialprüfung (BAM) beschriebenen Referenzverfahren (Stand Januar 2011) verfahren:

Zur volumetrisch-statischen Messung der Adsorptionsisotherme wird der zuvor getrockneten und durch Ausheizen im Vakuum entgasten Probe in dem auf konstanter Temperatur gehaltenen Probenbehälter schrittweise gasförmiges Adsorptiv zugeführt. Die im Gleichgewicht unter dem Gasdruck des Adsorptivs an der Probe adsorbierte spezifische Gasmenge $n_a$ [in mol/g] wird aus der jeweiligen Differenz zwischen dem Dosier- und dem Gleichgewichtsdruck in jedem Dosierschritt ermittelt und gegen den Relativdruck $p/p_0$ aufgetragen.

Die Auswertung erfolgt als Mehrpunkt-Variante in einem geeigneten Relativdruckbereich (BET-Bereich) mittels der linearisierten 2-Parameter-BET-Gleichung (I):

$$y_{BET} = \frac{p/p_0}{n_a\left(1 - p/p_0\right)} = \frac{C_{BET} - 1}{n_{mono} \cdot C_{BET}} \cdot \left(p/p_0\right) + \frac{1}{n_{mono} \cdot C_{BET}} = f(x) = i + kx \qquad (I)$$

Über ein lineares Regressionsverfahren werden der Ordinatenabschnitt i und die Steigung k bestimmt, aus denen sich die Monoschichtkapazität $n_{mono}$ [in mmol/g] nach $n_{mono}=1/(i+k)$ berechnen lässt. Die spezifische Oberfläche ergibt sich hieraus unter Einbeziehung des Platzbedarfs $\sigma$ für ein Adsorptivmolekül in der Monoschicht zu $a_{BET} = n_{mono} \cdot \sigma \cdot N_A$, wobei $N_A$ die Avogadro-Konstante darstellt. Gemäß den IUPAC-Empfehlungen 1984 und der ISO 9277:2010 wird für den molekularen Platzbedarf $\sigma$ von Stickstoff ein Wert von 0.162 nm$^2$ verwendet.

Zur Auswertung nach der BET-Mehrpunkt-Variante für mikroporöse Materialien wird ein Relativdruckbereich $p/p_0$ verwendet, in welchem $n_a\cdot(1 - p/p_0)$ einen stetig steigenden Verlauf mit wachsendem $p/p_0$ aufweist. Die obere Grenze des zur Auswertung verwendeten Relativdruckbereichs ergibt sich aus dem Maximum der Funktion $n_a\cdot(1 - p/p_0)$

über (1 - p/p$_0$). In diesem Relativdruckbereich muss die gefittete BET-Gerade ferner einen positiven Ordinatenabschnitt aufweisen, um einen positiven Wert für den BET-Parameter $C_{BET}$ zu erhalten und der zur berechneten spezifischen Monoschichtkapazität gehörende Relativdruckwert muss innerhalb der nach obigen Kriterien ermittelten Relativdruckgrenzen liegen. Der zur Auswertung verwendbare Relativdruckbereich p/p$_0$ liegt üblicherweise im Bereich von 0,001 bis 0,1.

**Beispiele**

Beispiel 1: Herstellung von Probenplatten mit und ohne Adsorptionsmaterial

Als Adsorptionsmaterialien wurden Molekularsieb mit einer Porengröße von 4 Å [0,4 nm], bspw. BASF Molekularsieb 4A (BASF, Ludwigshafen, Deutschland) und ein metallorganisches Netzwerk auf Basis von Aluminiumfumarat verwendet, bekannt unter der Bezeichnung Basolite A520 (BASF, Ludwigshafen, Deutschland). Die Synthese derartiger metallorganischer Netzwerke ist bspw. in WO 2012/042410 A1 beschrieben.

Kugelförmig vorliegendes Adsorptionsmaterial wurde in einem Labormörser manuell zerkleinert. Das gemörserte Material wurde durch ein Analysensieb mit Metalldrahtgewebe gemäß DIN ISO 3310-1:2001 mit einer Maschenweite von 500 μm gegeben. Die Siebfraktion wurde für die nachfolgende Compoundierung mit Polymer verwendet. Pulverförmig vorliegende Adsorptionsmaterialien wurden ohne vorherige manuelle Zerkleinerung wie erhalten direkt in der Compoundierung mit Polymer eingesetzt.

Mischungen, enthaltend 10 Gew.-% des jeweiligen Adsorptionsmaterials und 90 Gew.-% HPDE (Lupolen 4261 AG von LyondellBasell Industries, Rotterdam, Niederlande) wurden auf einem Brabender® Plasti-Corder® W 50 EHT mit Lab-Station-Antrieb und PC-gesteuerter Messeinheit (Brabender® GmbH & Co. KG, Duisburg, Deutschland) mit gegenläufigen Knetschaufeln bei 190 °C und 60 U/min für 5 Minuten homogenisiert. Die erhaltende plastische Schmelze wurde mit Hilfe einer Schwabenthan Probenpresse Polystat 200 T (ehemals Berlin, Deutschland) zu Platten der Abmessungen 200 mm x 100 mm x 1,6 mm bei 190 °C unter einem Druck von 90 bar für 5 min gepresst. Anschließend wurden die Platten mit Hilfe der Wasserkühlung der Probenpresse auf eine Temperatur unterhalb von 60 °C abgekühlt und entformt.

Als Blind- bzw. Vergleichsproben wurden nach dem vorbeschriebenen Verfahren Platten aus 100 Gew.-% HPDE ohne Adsorptionsmaterial hergestellt.

Beispiel 2: Laminierung der Probenplatten mit 5-Schicht-COEX-Material

Als 5-Schicht-COEX-Material wurde eine im Coextrusionsverfahren hergestellte Folie mit dem Schichtaufbau HDPE/Haftvermittler/EVOH/Haftvermittler/HDPE mit einer Gesamtdicke von 220 μm verwendet, in welcher die Dicke der beiden HDPE-Schichten (Lupolen 4261AG) jeweils 90 μm, die Dicke der beiden Haftvermittlerschichten-Sichten (Admer GT6, Mitsui Chemicals, Tokio, Japan) jeweils 10 μm und die Dicke der EVOH-Schicht (EVAL F101A, Kuraray, Chiyoda, Japan) 20 μm betrug.

Diese 5-Schicht-Folie wurde mit den in Beispiel 1 beschriebenen Probenplatten in einer Schwabenthan Probenpresse laminiert, indem auf eine Seite der Folie jeweils eine der in Beispiel 1 beschriebenen Probenplatten aufgebracht wurde und dieser Aufbau bei 190 °C unter einem Druck von 90 bar für 5 min gepresst wurde, das erhaltene Laminat anschließend mit Hilfe der Wasserkühlung der Probenpresse auf eine Temperatur unterhalb von 60 °C abgekühlt wurde und das Laminat entformt wurde.

Dieses Beispiel zeigt, dass sich adsorptionsmaterialumfassende Schichten im Sinne der vorliegenden Erfindung auch mit herkömmlichen Laminierverfahren mit mehrschichtigen Coextrusionsmaterialien verbinden lassen.

Beispiel 3: Adsorptions- und Desorptionsmessungen

Gemäß Beispiel 1 wurden Probenplatten eines Gewichts von etwa 20 g aus reinem HPDE (d.h. ohne laminierten 5-Schicht-Film) ohne Zusatz von Adsorptionsmittel (in Tabelle 1 als HPDE bezeichnet) als Vergleichsprobe sowie unter Zusatz von jeweils 10 Gew.-% des in Beispiel 1 genannten Molekularsiebs (in Tabelle 1 als MS bezeichnet) bzw. metallorganischen Netzwerks (in Tabelle 1 als MOF bezeichnet) als Adsorptionsmittel hergestellt. Diese wurden in Glasbehältern bei Raumtemperatur (etwa 20 bis 23 °C) einer gasförmigen Ethanolatmosphäre ausgesetzt. Als Alkohol wurde Ethanol absolut (vergällt mit 1% Methylethylketon) reinst verwendet, kommerziell erhältlich beispielsweise von der VWR International GmbH (Darmstadt, Deutschland) unter der Bestellnummer APPCA5007.2500. Die Gewichtszunahme wurde über einen Zeitraum von 147 Tagen mit Hilfe einer Analysenwaage Sartorius 2007 MP6 (Sartorius, Göttingen, Deutschland) bestimmt.

Die prozentuale Gewichtsveränderung der Probenplatten über die Zeit, jeweils bezogen auf den Zeitpunkt t = 0, sowie die sich hieraus ergebende prozentuale Ethanolbeladung, bezogen auf das Gewicht des Adsorptionsmittels in den Probenplatten, sind in Tabelle 1 dargestellt. Die angegebene Ethanolbeladung berücksichtigt den Gewichtsverlust des HDPE-Anteils in den Probenplatten durch Extraktion bestimmter Bestandteile aus dem Polymer über die Zeit.

Tabelle 1

| Zeit [Tage] | Gewichtszunahme der Probenplatte [%] | | | Ethanolbeladung des Adsorbers [%] | |
|---|---|---|---|---|---|
| | HDPE[1] | MS[2] | MOF[3] | MS[2] | MOF[3] |
| 0 | 0 | 0 | 0 | 0 | 0 |
| 2 | -0,03 | 0,11 | 0,37 | 1,38 | 3,96 |
| 15 | 0,07 | 0,44 | 0,62 | 3,79 | 5,61 |
| 28 | 0,23 | 0,85 | 1,02 | 6,70 | 8,25 |
| 50 | 0,21 | 1,01 | 1,09 | 8,40 | 9,01 |
| 64 | 0,30 | 1,11 | 1,25 | 8,74 | 9,92 |
| 91 | 0,17 | 1,34 | 1,46 | 12,07 | 13,05 |
| 114 | 0,38 | 1,67 | 1,61 | 13,70 | 12,84 |
| 147 | 0,21 | 1,83 | 1,69 | 16,59 | 15,13 |
| [1] Probenplatte aus 100 Gew.-% HDPE<br>[2] Probenplatte aus 90 Gew.-% HDPE & 10 Gew.-% Molekularsieb<br>[3] Probenplatte aus 90 Gew.-% HDPE & 10 Gew.-% metallorganischem Netzwerk | | | | | |

Die Probenplatte, welche Molekularsieb als Adsorptionsmittel enthielt, sowie die Probenplatte aus reinem HDPE wurden anschließend aus der Ethanolatmosphäre entnommen und zur Untersuchung der Desorptionseigenschaften in einem auf 60 °C temperierten Vakuum-Trockenschrank VT 5042 EK (Heraeus) unter Umgebungsdruck für 7 Tage gelagert. Die Gewichtsabnahme der Probenplatte wurde nach 24 h und 48 h sowie 7 Tagen Lagerung bei 60 °C mit Hilfe der Analysenwaage Sartorius 2007 MP6 bestimmt.

Auch hier wurde die prozentuale Gewichtsveränderung der Probenplatten über die Zeit, jeweils bezogen auf den Zeitpunkt t = 0, sowie die sich hieraus ergebende prozentuale Ethanolbeladung, bezogen auf das Gewicht des Adsorptionsmittels in den Probenplatten ermittelt. Die angegebene Ethanolbeladung berücksichtigt wiederum den Gewichtsverlust des HDPE-Anteils in den Probenplatten durch Extraktion bestimmter Bestandteile aus dem Polymer über die Zeit. Die Ergebnisse sind in Tabelle 2 dargestellt.

Tabelle 2

| Zeit [Tage] | Gewichtsveränderung der Probenplatte [%] | | Ethanolbeladung des Adsorbers [%] |
|---|---|---|---|
| | HDPE[1] | MS[2] | MS[2] |
| 148 (1)[3] | -0,02 | 1,54 | 15,55 |
| 149 (2)[3] | -0,08 | 1,48 | 15,42 |
| 154 (7)[3] | -0,10 | 1,47 | 15,52 |
| [1] Probenplatte aus 100 Gew.-% HDPE<br>[2] Probenplatte aus 90 Gew.-% HDPE & 10 Gew.-% Molekularsieb<br>[3] Gesamtdauer des Versuchs von dem Zeitpunkt an, zu welchem die Probenplatten erstmalig der Ethanolatmosphäre ausgesetzt wurden. Die Zeitdauer, in der nur die Desorption untersucht wurde, ist in Klammern angegeben. | | | |

Diese Ergebnisse zeigen, dass durch Zusatz eines geeigneten Adsorptionsmittels zu einem polymeren Trägermaterial flüchtige organische Verbindungen in diesem modifizierten Trägermaterial adsorbiert und somit dauerhaft gebunden werden können, teilweise sogar bei vergleichsweise hohen Temperaturen von beispielsweise 60 °C.

Ein handelsüblicher 6-Schicht-COEX-Kraftstoffbehälter mit einer Barriereschicht aus EVOH einer Dicke von 100 $\mu$m zeigt bei Verwendung von LEVIII-Kraftstoff einen Emissionsverlust von etwa 5 mg pro Tag in einem sog. CARB 24 hr diurnal Zyklus.

Wird ein solcher Kraftstoffbehälter dahingehend modifiziert, dass zu der (den) von der Kraftstoffseite gesehen hinter der EVOH-Barriereschicht gelegene(n) HDPE-Schicht(en) 400 g Adsorptionsmittel, entsprechend einer Modifizierung von 50 Gew.-% des in diesem Kraftstofftank verwendeten HDPE mit 10% Adsorptionsmittel, hinzugesetzt wird, kann durch Adsorption der durch die Barriereschicht hindurchtretenden flüchtigen organischen Verbindungen die Emission derselben über viele Jahre unterbunden bzw. verringert werden.

Selbst wenn nur von einem Wert von 8 % adsorbiertem Ethanol, bezogen auf die Masse des Adsorptionsmaterials, als Maximalwert der möglichen Beladung des Adsorptionsmittels ausgegangen würde und nahezu der gesamte Emissionsverlust des Kraftstofftanks auf die Emission von Ethanol zurückzuführen wäre, zum Beispiel bei Verwendung von Kraftstoffen mit hohen Ethanolgehalten wie E85 oder E100, ist ein solcher Kraftstofftank in der Lage 32 g Ethanol zu binden. Unter Berücksichtigung des oben genannten Emissionsverlustes des Kraftstofftanks von 5 mg pro Tag beträgt die Zeit bis zum Erreichen dieser maximalen Beladung des Adsorptionsmittels mit Ethanol 6400 Tage. Der modifizierte Kraftstofftank ist folglich in der Lage, das durch die EVOH-Barriereschicht über einen Zeitraum von mehr als 17,5 Jahren hindurchtretende Ethanol zu adsorbieren und somit dessen Freisetzung an die Umgebung zu unterbinden.

Durch die Verwendung von Mischungen unterschiedlicher Adsorptionsmittel kann das Adsorptionsverhalten des Kraftstofftanks ferner an die Emissionsprofile unterschiedlicher Kraftstoffe angepasst werden.

Beispiel 4: Wiederholung des Beispiels 3 mit weiteren Adsorptionsmaterialien

Gemäß Beispiel 1 wurden Probenplatten eines Gewichts von etwa 20 g aus reinem HPDE (d.h. ohne laminierten 5-Schicht-Film) ohne Zusatz von Adsorptionsmittel als Vergleichsprobe, sowie unter Zusatz von verschiedenen Zeolithen als Adsorptionsmitteln mit unterschiedlichen Gewichtsverhältnissen zwischen Trägermaterial und Zeolith, sowie unterschiedlichen Partikelgrößen der Zeolithen hergestellt (Tabellen 3 - 6). Weiterhin wurde für letztere Probenplatten teilweise nicht nur reines HDPE (virgin) verwendet, sondern auch Mischungen von HDPE mit Regenerationsmaterial (regrind), welches aus den Produktionsrückständen eines Coextrusionsverfahrens erhalten wurde. Solche Mischungen von virgin HDPE und regrind HDPE (in den folgenden Tabellen mit "Mischung" bezeichnet) enthielten etwa 80 Gew.-% virgin HDPE.

Tabelle 3: Versuchsreihe mit einem Pentasil Zeolith mit einem molaren Verhältnis von $SiO_2$ zu $AlO_2$ > 800. Die Oberfläche des Zeolithen betrug > 300 $m^2$/g. Der verwendete Zeolith hatte einen MFI framework type.

| Probe | Trägermaterial | Zeolith [Gew.-%] | Partikelgröße [μm] |
|---|---|---|---|
| 7 | virgin HDPE | 10 | 40 |
| 8 | Mischung | 10 | 40 |
| 9 | virgin HDPE | 12 | 25 |
| 10 | Mischung | 12 | 25 |
| 11 | virgin HDPE | 25 | 7 |
| 12 | Mischung | 25 | 7 |
| 13 | virgin HDPE | 40 | 7 |
| 14 | Mischung | 40 | 7 |

Tabelle 4: Versuchsreihe mit einem Pentasil Zeolith mit einem molaren Verhältnis von $SiO_2$ zu $AlO_2$ > 200. Die Oberfläche des Zeolithen betrug > 300 $m^2$/g. Der verwendete Zeolith hatte einen MFI framework type.

| Probe | Trägermaterial | Zeolith [Gew.-%] | Partikelgröße [μm] |
|---|---|---|---|
| 15 | virgin HDPE | 10 | 50 |
| 16 | Mischung | 10 | 50 |
| 17 | virgin HDPE | 12 | 25 |
| 18 | Mischung | 12 | 25 |
| 19 | virgin HDPE | 25 | 10 |
| 20 | Mischung | 25 | 10 |
| 21 | virgin HDPE | 40 | 10 |
| 22 | Mischung | 40 | 10 |

Tabelle 5: Versuchsreihe mit einem Beta Zeolith (BEA framework type), sowie einem Mordenit Zeolith (MOR framework type). Der Beta Zeolith hatte ein molares Verhältnis von $SiO_2$ zu $AlO_2$ von ca 150 und die Oberfläche des Zeolithen betrug > 500 $m^2$/g. Der Mordenit Zeolith hatte ein molares Verhältnis von $SiO_2$ zu $AlO_2$ von ca 200 und die Oberfläche des Zeolithen betrug > 400 $m^2$/g. Es wurde als Trägermaterial ausschließlich "reines" HDPE verwendet.

| Probe | Zeolith framework type | Zeolith [Gew.-%] | Partikelgröße [$\mu$m] |
|---|---|---|---|
| 23 | BEA | 10 | 50 |
| 24 | MOR | 10 | 50 |
| 25 | BEA | 10 | 25 |
| 26 | MOR | 10 | 25 |
| 27 | BEA | 10 | 10 |
| 28 | MOR | 10 | 10 |

Tabelle 6: Versuchsreihe mit weiteren verschiedenen Zeolithen (unterschiedliche framework types, unterschiedliche molare Verhältnisse von $SiO_2$ zu $AlO_2$). Die Partikelgröße wurde auf ca. 10 $\mu$m eingestellt, ebenso betrug das Gewichtsverhältnis des Adsorptionsmaterials zum Trägermaterial 10 Gew.-%. Es wurde ausschließlich virgin HDPE als Trägermaterial verwendet. Die Oberflächen der Zeolithe entsprechen in etwa denen in den zuvor genannten Versuchsreihen.

| Probe | Zeolith framework type | Molares Verhältnis von $SiO_2$ zu $AlO_2$ |
|---|---|---|
| 29 | MFI | > 1400 |
| 30 | BEA | > 1400 |
| 31 | MOR | > 1400 |
| 32 | MFI | > 800 |
| 33 | BEA | > 800 |
| 34 | MOR | > 800 |
| 35 | MFI | > 200 |
| 36 | BEA | > 200 |
| 37 | MOR | > 200 |
| 38 | MFI | > 5 |
| 39 | BEA | > 5 |
| 40 | MOR | > 5 |
| 41 | MFI | > 1 |
| 42 | BEA | > 1 |
| 43 | MOR | > 1 |

Die so hergestellten Probenplatten 7 - 43 wurden analog zum Beispiel 3 in Glasbehältern bei Raumtemperatur (etwa 20 bis 23 °C) einer gasförmigen Atmosphäre von verschiedenen flüchtigen organischen Lösungsmitteln (Methanol, Ethanol, 2-Propanol, 1-Butanol, 2 Methyl-1-propanol, 2-Butanol, MTBE, ETBE, TAME), Tertiär Amyl Ethyl Ether (TAEE), Dimethylether (DME), Diethylether (DEE), Terahydrofuran (THF), 2,5-Dimethylfuran und Furan) ausgesetzt. Erneut wurde die Gewichtszunahme mit Hilfe einer Analysenwaage bestimmt. In allen Fällen konnte analog zu Beispiel 3 gezeigt werden, dass eine Adsorption des verwendeten Lösungsmittels an das jeweils verwendete Adsorptionsmaterial in den Probenplatten erfolgt. Diese Beispiele belegen, dass alle verwendeten Adsorptionsmaterialen zur Adsorption aller getesteten flüchtigen organischen Lösungsmittel geeignet sind.

Gleichsam wurden auch Desorptionsmessungen analog zu Beispiel 3 durchgeführt. Die Ergebnisse zeigten erneut, dass durch Zusatz eines geeigneten Adsorptionsmittels zu einem polymeren Trägermaterial die untersuchten flüchtigen organischen Verbindungen auch dauerhaft und sogar bei vergleichsweise hohen Temperaturen gebunden werden können.

Beipiel 5: Vergleich einzelner Probenplatten

Die folgende Tabelle 7 fasst die Ergebnisse der Adsorptionsmessungen aus Beispiel 4 für ausgewählte Probenplatten zusammen. Angegeben ist eine Gewichtung, wie gut das Adsorptionsmaterial in der Lage war, Ethanol zu adsorbieren. Hierbei entsprechen (+++), (++) und (+) einer abnehmend besseren Adsorption und (-) einer weniger guten Adsorption im Vergleich zu dem in Beispiel 3 verwendeten Adsorptionsmittel BASF Molekularsieb 4A.

Tabelle 7:

| Probe | Adsorption | Probe | Adsorption |
|---|---|---|---|
| 7 | (+) | 30 | (++)/(+++) |
| 8 | (+) | 31 | (++)/(+++) |
| 9 | (++) | 32 | (+++) |
| 10 | (++) | 33 | (++)/(+++) |
| 17 | (+) | 34 | (++)/(+++) |
| 18 | (+) | 35 | (++) |
| 27 | (++) | 41 | (-) |
| 28 | (++) | 42 | (-) |
| 29 | (+++) | 43 | (-) |

Die Ergebnisse lassen vermuten, dass Partikelgrößen im Bereich von 10 $\mu$m besser geeignet sind, als größere Partikelgrößen (vgl. z.B. Proben 7, 8 und 8, 9). Weiterhin zeigte sich, dass die Verwendung von regrind HDPE keine nachteiligen Effekte auf die Adsorptionseigenschaften hat (vgl. z.B. Proben 7, 9, 17 und 8, 10, 18).
Überrawschend wurde gefunden, dass ein molares Verhältniss von $SiO_2$ zu $AlO_2$ von > 200 vorteilhaft ist (vgl. z.B. Probe 35). Im Bereich von > 800 ergaben sich erneut deutliche Steigerungen (vgl. Proben 32, 33, 34 und 17, 27, 28), aber auch darüber hinaus (Proben 29, 30, 31) wurden deutliche verbesserte Adsorptionswerte erreicht.
Zudem scheint ein Gewichtsverhältnis von Adsorptionsmaterial zu Trägermaterial im unteren zweistelluigen Bereich (10-15 Gew.-%) vorteilhaft (nicht dargestellt).

Beipiel 6: Wiederholung des Beispiels 3 mit Aktivkohlepulver als Adsorptionsmaterial

Erneut wurden gemäß Beispiel 1 Probenplatten eines Gewichts von etwa 20 g aus reinem HPDE (d.h. ohne laminierten 5-Schicht-Film) ohne Zusatz von Adsorptionsmittel als Vergleichsprobe, sowie unter Zusatz von Aktivkohlepulver (Nuchar RGC Powder) hergestellt. Auch in dieser Versuchsreihe betrug der Anteil des Adsorptionsmittel ungefähr 10 Gew.-%. Die Partikelgröße von ungefähr 95 % des Pulvers war kleiner als 63 $\mu$m.
Die so hergestellten Probenplatten wurden analog zu den Beispielen 3 und 4 verschiedenen flüchtigen organischen Lösungsmitteln ausgesetzt und die Adsorption der Lösungsmittel bestimmt. In allen Fällen konnte gezeigt werden, dass eine Adsorption des verwendeten Lösungsmittels an die Probenplatten erfolgt. Diese Beispiele belegen, dass auch Aktivkohle als Adsorptionsmaterial zur Adsorption von flüchtigen organischen Lösungsmitteln geeignet ist.

**Patentansprüche**

1. Mehrlagiges Verbundmaterial mit Barriereeigenschaften für flüchtige organische Verbindungen, wobei die flüchtigen organischen Verbindungen zumindest eine funktionelle Gruppe aufweisen, ausgewählt aus der Gruppe bestehend aus Hydroxygruppe, Estergruppe und/oder Ethergruppe, wobei das mehrlagige Verbundmaterial eine erste und eine zweite Oberfläche aufweist und mindestens eine erste Schicht und mindestens eine weitere Schicht umfasst, **dadurch gekennzeichnet, dass** eine der beiden Schichten mindestens ein Adsorptionsmaterial für die flüchtigen organischen Verbindungen und mindestens ein polymeres Trägermaterial in Mischung oder im Verbund mit dem Adsorptionsmaterial umfasst, wobei für den Fall, dass das mindestens eine Adsorptionsmaterial und das mindestens eine polymere Trägermaterial im Verbund vorliegen, das Verbundmaterial mindestens drei Schichten umfasst und

wobei das Adsorptionsmaterial ausgewählt ist aus der Gruppe bestehend aus Schicht- und Gerüstsilikaten, porösen Kohlenstoffmaterialien und metallorganischen Gerüsten (MOF) und bevorzugt mindestens ein poröses Material umfasst, welches besonders bevorzugt ausgewählt ist aus der Gruppe, bestehend aus Aktivkohle, kovalenten organischen Gerüsten (covalent organic frameworks / COF), porösen Silikaten, metallorganischen Gerüsten (MOF) und Mischungen derselben und insbesondere aus der Gruppe, bestehend aus Zeolithen und metallorganischen Gerüsten (MOF) sowie Mischungen derselben,

**dadurch gekennzeichnet, dass**

das polymere Trägermaterial zumindest einen Anteil von 75 Gew.-% HDPE umfasst.

2.  Verbundmaterial gemäß Anspruch 1, **dadurch gekennzeichnet, dass** der Gehalt an Adsorptionsmaterial in der adsorptionsmaterialumfassenden Schicht, sofern Adsorptionsmaterial und Trägermaterial in Mischung in einer Schicht vorliegen, oder in dem Verbund aus der adsorptionsmaterialumfassenden Schicht und der trägermaterialumfassenden Schicht > 0,001 bis < 80 Gew.-%, bevorzugt $\geq 2$ und $\leq 50$ Gew.-%, weiterhin bevorzugt $\geq 5$ und $\leq 20$ Gew.-% und besonders bevorzugt $\geq 9$ und $\leq 13$ Gew.-%, oder $\geq 9$ und $\leq 11$ Gew.-% beträgt, jeweils bezogen auf das Gesamtgewicht an Adsorptionsmaterial und polymerem Trägermaterial.

3.  Verbundmaterial gemäß mindestens einem der vorhergehenden Ansprüche, wobei die flüchtigen organischen Verbindungen ausgewählt sind aus der Gruppe bestehend aus Alkoholen, Estern und/oder Ethern, wobei bevorzugt die Alkohole ausgewählt sind aus der Gruppe bestehend aus Methanol, Ethanol, Propanol, Butanol, Pentanol und/oder deren Isomeren, wobei bevorzugt die Ether ausgewählt sind aus der Gruppe bestehend aus tert-Butylethylether (ETBE), 2-Methoxy-2-methylpropan (Methyl-tert-butylether, MTBE), Dimethylether, Diethylether, Tetrahydrofuran (THF), Di-n-butylether, tert-Amylmethylether (TAME), tert-Amylethylether (TAEE) und Dioxan und wobei bevorzugt die Ester Fettsäuremethylester (FAME) sind und weiter bevorzugt ausgewählt sind aus der Gruppe bestehend aus Rapsmethylester (RME), Sojamethylester (SME) und/oder Jatropha Methyl Ester (JME).

4.  Verbundmaterial gemäß mindestens einem der vorhergehenden Ansprüche, **dadurch gekennzeichnet, dass** das Adsorptionsmaterial ein Zeolith ist, mit einem molaren Verhältnis von $SiO_2$ zu $AlO_2$ von $\geq 200$, bevorzugt mit einem molaren Verhältnis von $SiO_2$ zu $AlO_2$ von $\geq 200$ und $\leq 1500$, weiter bevorzugt mit einem molaren Verhältnis von $SiO_2$ zu $AlO_2$ von $\geq 400$ und $\leq 1300$, weiter bevorzugt mit einem molaren Verhältnis von $SiO_2$ zu $AlO_2$ von $\geq 500$ und $\leq 1000$ und am bevorzugtesten mit einem molaren Verhältnis von $SiO_2$ zu $AlO_2$ von $\geq 700$ und $\leq 900$.

5.  Verbundmaterial gemäß mindestens einem der vorhergehenden Ansprüche, **dadurch gekennzeichnet, dass** die mindestens eine weitere Schicht mindestens ein polymeres Material umfasst, welches Barriereeigenschaften gegenüber flüchtigen organischen Verbindungen aufweist, welches bevorzugt ausgewählt ist aus der Gruppe, bestehend aus Polyamid (PA), Ethylen-Vinylalkohol-Copolymer (EVOH), Polyvinylidenchlorid (PVDC) und fluoriertem oder sulphoniertem Polyethylen.

6.  Verwendung des mehrlagigen Verbundmaterials nach zumindest einem der Ansprüche 1-5 zur Herstellung eines Gegenstands zur Aufnahme, Durchleitung bzw. Umhüllung von Substanzen, welche die besagte flüchtige organische Verbindungen umfassen, bevorzugt zur Herstellung eines Kraftstoffbehälters.

7.  Gegenstand zur Aufnahme, Durchleitung bzw. Umhüllung von Substanzen, die flüchtige organische Verbindungen umfassen, umfassend das mehrlagige Verbundmaterial gemäß mindestens einem der vorhergehenden Ansprüche.

8.  Gegenstand gemäß Anspruch 7, **dadurch gekennzeichnet, dass** dieser eine Folie, ein Rohr, einen Hohlkörper oder ein Verschluss- oder sonstiges (An-)Bauteil für einen solchen Hohlkörper darstellt, bevorzugt einen Hohlkörper, ein Verschluss- oder sonstiges (An-)Bauteil hierfür und besonders bevorzugt einen Kraftstoffbehälter darstellt.

9.  Gegenstand gemäß zumindest einem der Ansprüche 7 oder 8, **dadurch gekennzeichnet, dass** die mindestens eine weitere Schicht des Verbundmaterials mindestens ein polymeres Material umfasst, welches Barriereeigenschaften gegenüber flüchtigen organischen Verbindungen aufweist, welches bevorzugt ausgewählt ist aus der Gruppe, bestehend aus Polyamid (PA), Ethylen-Vinylalkohol-Copolymer (EVOH), Polyvinylidenchlorid (PVDC) und fluoriertem oder sulphoniertem Polyethylen, wobei sich die Schicht, welche dieses polymeres Material mit Barriereeigenschaften umfasst, näher an derjenigen Oberfläche des Gegenstands befindet, die zum Kontakt mit der die flüchtige organische Verbindung umfassende Substanz vorgesehen ist, als die adsorptionsmaterialumfassende Schicht.

10. Verwendung eines mehrlagigen Verbundmaterials oder eines Gegenstands gemäß mindestens einem der vorhergehenden Ansprüche zur Verminderung der Emission von flüchtigen organischen Verbindungen.

11. Verfahren zur Herstellung eines Gegenstands oder eines mehrlagigen Verbundmaterials gemäß mindestens einem der vorhergehenden Ansprüche, umfassend einen Schritt zur Ausbildung mindestens einer adsorptionsmaterialumfassenden Schicht mittels (Co-)Extrusion, Spritzguss, (Co-)Extrusionsblasformen oder Laminieren, insbesondere durch Coextrusionsblasformen oder Spritzguss.

12. Verfahren nach Anspruch 11, wobei die mindestens eine adsorptionsmaterialumfassende Schicht auf der mindestens einen weiteren Schicht mittels (Co-)Extrusion, Spritzguss, (Co-)Extrusionsblasformen oder Laminieren, insbesondere durch Coextrusionsblasformen, ausgebildet wird.

**Claims**

1. Multilayer composite having barrier properties for volatile organic compounds,
where the volatile organic compounds have at least one functional group selected from the group consisting of hydroxyl group, ester group and/or ether group,
wherein the multilayer composite has a first surface and a second surface and comprises at least one first layer and at least one further layer, **characterized in that** one of the two layers comprises at least one adsorption material for the volatile organic compounds and at least one polymeric support material in admixture with or bonded to the adsorption material, where if the at least one adsorption material and the at least one polymeric support material are bonded to one another, the composite comprises at least three layers and
where the adsorption material is selected from the group consisting of sheet and framework silicates, porous carbon materials and metal organic frameworks (MOF) and preferably comprises at least one porous material which is particularly preferably selected from the group consisting of activated carbon, covalent organic frameworks (COF), porous silicates, metal organic frameworks (MOF) and mixtures thereof and in particular from the group consisting of zeolites and metal organic frameworks (MOF) and mixtures thereof,
**characterized in that**
the polymeric support material comprises at least a portion of 75% by weight of HDPE.

2. Composite according to Claim 1, **characterized in that** the content of adsorption material in the layer comprising adsorption material, if adsorption material and support material are present in admixture in one layer, or in the bonded assembly of the layer comprising adsorption material and the layer comprising support material is from > 0.001 to < 80% by weight, preferably ≥ 2 and ≤ 50% by weight, more preferably ≥ 5 and ≤ 20% by weight and particularly preferably ≥ 9 and ≤ 13% by weight, or ≥ 9 and ≤ 11% by weight, in each case based on the total weight of adsorption material and polymeric support material.

3. Composite according to at least one of the preceding claims, where the volatile organic compounds are selected from the group consisting of alcohols, esters and/or ethers, where the alcohols are preferably selected from the group consisting of methanol, ethanol, propanol, butanol, pentanol and/or isomers thereof, where the ethers are preferably selected from the group consisting of tert-butyl ethyl ether (ETBE), 2-methoxy-2-methylpropane (methyl tert-butyl ether, MTBE), dimethyl ether, diethyl ether, tetrahydrofuran (THF), di-n-butyl ether, tert-amyl methyl ether (TAME), tert-amyl ethyl ether (TAEE) and dioxane and where the esters are preferably fatty acid methyl esters (FAMEs) and more preferably are selected from the group consisting of rapeseed methyl ester (RME), soybean methyl ester (SME) and/or Jatropha Methyl Ester (JME).

4. Composite according to at least one of the preceding claims, **characterized in that** the adsorption material is a zeolite, having a molar ratio of $SiO_2$ to $AlO_2$ of ≥ 200, preferably having a molar ratio of $SiO_2$ to $AlO_2$ of ≥ 200 and ≤ 1500, more preferably having a molar ratio of $SiO_2$ to $AlO_2$ of ≥ 400 and ≤ 1300, more preferably having a molar ratio of $SiO_2$ to $AlO_2$ of ≥ 500 and ≤ 1000 and most preferably having a molar ratio of $SiO_2$ to $AlO_2$ of ≥ 700 and ≤ 900.

5. Composite according to at least one of the preceding claims, **characterized in that** the at least one further layer comprises at least one polymeric material which has barrier properties in respect of volatile organic compounds and is preferably selected from the group consisting of polyamide (PA), ethylene-vinyl alcohol copolymer (EVOH), polyvinylidene chloride (PVDC) and fluorinated or sulfonated polyethylene.

6. Use of the multilayer composite according to at least one of Claims 1-5 in the manufacture of an object for the accommodation, passage and/or envelopment of substances comprising said volatile organic compounds, preferably in the manufacture of a motor fuel container.

7. Object for the accommodation, passage or envelopment of substances comprising volatile organic compounds, comprising the multilayer composite according to at least one of the preceding claims.

8. Object according to Claim 7, **characterized in that** it is a film, a pipe, a hollow body or a closure or other component for such a hollow body, preferably a hollow body, a closure or other component for this and particularly preferably is a fuel container.

9. Object according to at least one of Claims 7 and 8, **characterized in that** the at least one further layer of the composite comprises at least one polymeric material which has barrier properties in respect of volatile organic compounds and is preferably selected from the group consisting of polyamide (PA), ethylene-vinyl alcohol copolymer (EVOH), polyvinylidene chloride (PVDC) and fluorinated or sulfonated polyethylene, where the layer which comprises this polymeric material having barrier properties is located closer to the surface of the object which is provided for contact with the substance comprising the volatile organic compound than the layer comprising adsorption material.

10. Use of a multilayer composite or an object according to at least one of the preceding claims for reducing the emission of volatile organic compounds.

11. Process for producing an object or a multilayer composite according to at least one of the preceding claims, which comprises a step for forming at least one layer comprising adsorption material by means of (co)extrusion, injection molding, (co)extrusion blow molding or lamination, in particular by coextrusion blow molding or injection molding.

12. Process according to Claim 11, where the at least one layer comprising adsorption material is formed on the at least one further layer by means of (co)extrusion, injection molding, (co)extrusion blow molding or lamination, in particular by coextrusion blow molding.

**Revendications**

1. Matériau composite multicouche présentant des propriétés de barrière contre des composés organiques volatils, les composés organiques volatils présentant au moins un groupe fonctionnel, choisi dans le groupe constitué par les groupes hydroxy, les groupes ester et/ou les groupes éther,
le matériau composite multicouche présentant une première et une deuxième surface et comprenant au moins une première couche et au moins une autre couche, **caractérisé en ce qu'**une des deux couches comprend au moins un matériau d'adsorption pour les composés organiques volatils et au moins un matériau support polymère en mélange ou en association avec le matériau d'adsorption, le matériau composite comprenant au moins trois couches dans le cas où ledit au moins un matériau d'adsorption et ledit au moins un matériau support polymère se trouvent en association et
le matériau d'adsorption étant choisi dans le groupe constitué par les silicates à couches et les silicates de structure, les matériaux carbonés poreux et les structures métallo-organiques (MOF) et comprenant de préférence au moins un matériau poreux, qui est choisi de manière particulièrement préférée dans le groupe constitué par le charbon actif, les structures organiques covalentes (covalent organic frameworks - COF), les silicates poreux, les structures métallo-organiques (MOF) poreuses et leurs mélanges et en particulier dans le groupe constitué par les zéolithes et les structures métallo-organiques (MOF) ainsi que leurs mélanges, **caractérisé en ce que**
le matériau support polymère comprend au moins une proportion de 75% en poids de HDPE.

2. Matériau composite selon la revendication 1,
**caractérisé en ce que** la teneur en matériau d'adsorption dans la couche comprenant le matériau d'adsorption, pour autant que le matériau d'adsorption et le matériau support se trouvent en mélange dans une couche, ou dans le composite de la couche comprenant le matériau d'adsorption et de la couche comprenant le matériau support est > 0,001 à < 80% en poids, de préférence ≥ 2 et ≤ 50% en poids, plus préférablement ≥ 5 et ≤ 20% en poids et de manière particulièrement préférée ≥ 9 et ≤ 13% en poids, ou ≥ 9 et ≤ 11% en poids, à chaque fois par rapport au poids total de matériau d'adsorption et de matériau support polymère.

3. Matériau composite selon au moins l'une quelconque des revendications précédentes, les composés organiques volatils étant choisis dans le groupe constitué par les alcools, les esters et/ou les éthers, les alcools étant de préférence choisis dans le groupe constitué par le méthanol, l'éthanol, le propanol, le butanol, le pentanol et/ou leurs isomères, les éthers étant de préférence choisis dans le groupe constitué le tert-butyléthyléther (ETBE), le 2-méthoxy-2-méthylpropane (méthyl-tert-butyléther, MTBE), le diméthyléther, le diéthyléther, le tétrahydrofuranne (THF), le di-n-butyléther, le tert-amylméthyléther (TAME), le tert-amyléthyléther (TAEE) et le dioxane et les esters étant de préférence des esters métalliques d'acide gras (FAME) et plus préférablement choisis dans le groupe constitué par l'ester méthylique de colza (RME), l'ester méthylique de soja (SME) et/ou l'ester méthylique de jatropha(JME).

4. Matériau composite selon au moins l'une quelconque des revendications précédentes, **caractérisé en ce que** le matériau d'adsorption est une zéolithe présentant un rapport molaire de $SiO_2$ à $AlO_2 \geq 200$, de préférence un rapport molaire de $SiO_2$ à $AlO_2 \geq 200$ et $\leq 1500$, plus préférablement un rapport molaire de $SiO_2$ à $AlO_2 \geq 400$ et $\leq 1300$, plus préférablement un rapport molaire de $SiO_2$ à $AlO_2 \geq 500$ et $\leq 1000$ et le plus préférablement un rapport molaire de $SiO_2$ à $AlO_2 \geq 700$ et $\leq 900$.

5. Matériau composite selon au moins l'une quelconque des revendications précédentes, **caractérisé en ce que** ladite au moins une autre couche comprend au moins un matériau polymère, qui présente des propriétés de barrière par rapport à des composés organiques volatils, qui est de préférence choisi dans le groupe constitué par le polyamide (PA), le copolymère d'éthylène-alcool vinylique (EVOH), le poly(chlorure de vinylidène) (PVDC) et le polyéthylène fluoré ou sulfoné.

6. Utilisation du matériau composite multicouche selon au moins l'une quelconque des revendications 1-5 pour la fabrication d'un objet destiné à recevoir, faire passer ou envelopper des substances qui comprennent lesdits composés organiques volatils, de préférence pour la fabrication d'un réservoir à carburant.

7. Objet destiné à recevoir, faire passer ou envelopper des substances qui comprennent des composés organiques volatils, comprenant le matériau composite multicouche selon au moins l'une quelconque des revendications précédentes.

8. Objet selon la revendication 7, **caractérisé en ce qu'**il s'agit d'une feuille, d'un tuyau, d'un corps creux ou d'une pièce ou d'un accessoire de fermeture ou autre pour un tel corps creux, de préférence d'un corps creux, d'une pièce ou d'un accessoire de fermeture ou autre pour celui-ci et de manière particulièrement préférée d'un réservoir à carburant.

9. Objet selon au moins l'une quelconque des revendications 7 ou 8, **caractérisé en ce que** ladite au moins une autre couche du matériau composite comprend au moins un matériau polymère, qui présente des propriétés de barrière par rapport à des composés organiques volatils, qui est de préférence choisi dans le groupe constitué par le polyamide (PA), le copolymère d'éthylène-alcool vinylique (EVOH), le poly(chlorure de vinylidène) (PVDC) et le polyéthylène fluoré ou sulfoné, la couche, qui comprend ce matériau polymère présentant des propriétés de barrière, se trouvant plus près de la surface de l'objet qui est en contact avec la substance comprenant des composés organiques volatils que la couche comprenant le matériau d'adsorption.

10. Utilisation d'un matériau composite multicouche ou d'un objet selon au moins l'une quelconque des revendications précédentes pour la diminution de l'émission de composés organiques volatils.

11. Procédé pour la fabrication d'un objet ou d'un matériau composite multicouche selon au moins l'une quelconque des revendications précédentes, comprenant une étape pour la réalisation d'au moins une couche comprenant un matériau d'adsorption par (co)extrusion, moulage par pulvérisation, moulage par (co)extrusion-soufflage ou laminage, en particulier par moulage par coextrusion-soufflage ou moulage par pulvérisation.

12. Procédé selon la revendication 11, ladite au moins une couche comprenant un matériau d'adsorption était formée sur ladite au moins une autre couche par (co)extrusion, moulage par pulvérisation, moulage par (co)extrusion-soufflage ou laminage, en particulier par moulage par coextrusion-soufflage.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10114872 A1
- DE 102004019875 A1
- WO 9429378 A1
- WO 2006074997 A1
- WO 2012042410 A1

**In der Beschreibung aufgeführte Nicht-Patentliteratur**

- **X. FENG et al.** *Chem. Soc. Rev.,* 2012, vol. 41, 6010-6022
- **K. S. PARK et al.** *PNAS,* 2006, vol. 103, 10186-10191